(19) Europäisches Patentamt
European Patent Office
Office européen des brevets

(11) **EP 4 494 868 A1**

(12) **EUROPEAN PATENT APPLICATION**
published in accordance with Art. 153(4) EPC

(43) Date of publication:
**22.01.2025 Bulletin 2025/04**

(21) Application number: **23770426.7**

(22) Date of filing: **02.03.2023**

(51) International Patent Classification (IPC):
**B32B 27/32** $^{(2006.01)}$  **B32B 9/00** $^{(2006.01)}$
**B65D 65/40** $^{(2006.01)}$

(52) Cooperative Patent Classification (CPC):
**B32B 9/00; B32B 27/32; B65D 65/40**

(86) International application number:
**PCT/JP2023/007750**

(87) International publication number:
**WO 2023/176468 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 16.03.2022 JP 2022041071
29.03.2022 JP 2022053120
07.09.2022 JP 2022141947
12.10.2022 JP 2022163730

(71) Applicant: **Toray Industries, Inc.**
**Tokyo 103-8666 (JP)**

(72) Inventors:
• **YAMADA, Emi**
**Otsu-shi, Shiga 520-8558 (JP)**
• **KAI, Michiko**
**Otsu-shi, Shiga 520-8558 (JP)**
• **SATO, Makoto**
**Otsu-shi, Shiga 520-8558 (JP)**

(74) Representative: **Kador & Partner Part mbB**
**Corneliusstraße 15**
**80469 München (DE)**

(54) **LAMINATED BODY, PACKAGING BODY, AND METHOD FOR PRODUCING LAMINATED BODY**

(57)    The present invention addresses the problem of providing: a laminated body which includes a polyolefin resin substrate, is dense, and has good barrier properties; a packaging body; and a method for producing the laminated body. The solution to this problem is a laminated body comprising a polyolefin resin film, a metal layer and/or an inorganic compound layer, and a coating layer being disposed in this order on at least one surface of the polyolefin resin film. The ratio P1/P2 between peak intensities P1 and P2 is 3.5 - 8.0, the peak intensities being determined by measurement with a FT-IR-ATR method. P1 is the intensity of the greatest peak present in the 1,050 to 1,080 cm$^{-1}$ range; and P2 is the intensity of the greatest peak present in the 920 to 970 cm$^{-1}$ range.

Figure 1

EP 4 494 868 A1

**Description**

TECHNICAL FIELD

The present invention relates to a laminated body using a polyolefin-based resin substrate and having good barrier properties, a packaging body, and a method for producing a laminated body.

BACKGROUND ART

Packaging materials for foods, pharmaceuticals, daily necessities, and the like are required to have oxygen barrier properties and water vapor barrier properties in order to prevent deterioration of contents. As these barrier packaging materials, a barrier film in which a metal layer of aluminum or the like, a metal oxide layer, and a protective layer are laminated on a resin film of polyester or the like has been used. In particular, when a metal oxide layer is laminated, since a transparent film is formed, visibility is good, and heating with a microwave oven is possible in food packaging, and thus convenience is high, so that the metal oxide layer is widely used.

On the other hand, since a plastic packaging material is not decomposed in soil even if it is landfilled after use, or heat is greatly generated at the time of incineration, there is a concern about environmental load. In recent years, marine pollution due to plastic waste flowing out has also become a major problem, and there is an increasing trend worldwide to reduce the amount of plastic materials used and reuse the plastic materials. Therefore, from the viewpoint of environmental conservation, collection and recycling of packaging materials have been proposed.

As a substrate film of a barrier film used for a conventional packaging material, a polyester-based resin represented by polyethylene terephthalate having high heat resistance and high transparency, or a polyamide-based resin having excellent mechanical strength has been used. Since these films do not have heat sealability required for package forming processing or the like of a packaging material, they are laminated with a thermally fusible polypropylene-based resin and used as a packaging material. However, since it is difficult to separate a laminated body of different materials at the time of recycling, in order to enhance recyclability, attempts have been made to use monomaterials in which a packaging material is composed of the same material, that is, an olefin-based material similar to a polypropylene-based resin having heat sealability as a substrate of a barrier film. However, the olefin-based material has a problem in that the oxygen barrier properties of the substrate itself are poor as compared with the polyester-based resin or the polyamide-based resin. Therefore, in order to improve the oxygen barrier properties and enhance the storage stability of the contents as a packaging material, a method of improving the barrier properties by forming a coating layer has been studied (Patent Documents 1 and 2).

PRIOR ART DOCUMENTS

PATENT DOCUMENTS

Patent Document 1: Japanese Patent Laid-open Publication No. 2007-216504
Patent Document 2: Japanese Patent Laid-open Publication No. 2004-203022

SUMMARY OF THE INVENTION

PROBLEMS TO BE SOLVED BY THE INVENTION

Patent Document 1 discloses a gas barrier film provided with a vapor deposited film of an inorganic oxide and a gas barrier coating film on a substrate, but when the gas barrier film is applied to a polyolefin-based resin film in which processing condition is as high as 150°C or higher and heat resistance is lower than that of a polyester-based resin, a problem arises in that wrinkles or cracks are generated. Patent Document 2 discloses a vapor-deposited film that can be used as a packaging material by laminating a vapor-deposited layer and a composite film on a polypropylene film, but the vapor-deposited film is not sufficiently cured so densely as to suppress deterioration of contents, and therefore it is not sufficient to obtain barrier properties and there is room for improvement.

An object of the present invention is to provide a laminated body which includes a metal layer and/or an inorganic compound layer and a coating layer laminated on a polyolefin-based resin film, is dense, and has good barrier properties, a packaging body, and a method for producing a laminated body.

SOLUTIONS TO THE PROBLEMS

Preferred aspects of the present invention are as follows.

(1) A laminated body including an inorganic layer on at least one surface of a polyolefin-based resin film, in which one or more of the inorganic layers each have a metal layer and/or an inorganic compound layer, and a value of a ratio P1/P2 of the following peak intensities P1 and P2 is 3.5 or more and 8.0 or less, the peak intensities being detected by measuring at least one outermost layer (hereinafter, referred to as a coating layer) of the laminated body by a FT-IR-ATR method (total reflection Fourier transform infrared spectroscopy).

P1: an intensity of a maximum peak present at 1,050 to 1,080 $cm^{-1}$
P2: an intensity of a maximum peak present at 920 to 970 $cm^{-1}$

(2) The laminated body according to (1), in which the coating layer contains a water-soluble resin and a hydrolysate of a metal alkoxide and/or a polycondensate thereof.
(3) The laminated body according to (1) or (2), in which a change amount $\Delta(P1/P2)$ of the value of the ratio P1/P2 of the following peak intensities P1 and P2 detected by analyzing the coating layer by a FT-IR-ATR method before and after a heat treatment at 120°C for 1 minute is -0.5 or more and 0.5 or less.
(4) A laminated body including one or more inorganic layers on at least one surface of a polyolefin-based resin film, in which the one or more inorganic layers each have a metal layer and/or an inorganic compound layer, at least one outermost layer (hereinafter, referred to as a coating layer) of the laminated body contains one or more segments selected from a segment derived from a vinyl alcohol-based resin, a segment derived from a polysaccharide, and a segment derived from an acrylic polyol resin, and a segment having a Si-O bond and a metal element M other than silicon Si, and a ratio m/s of a peak intensity m of fragment ions derived from the metal element M and a peak intensity s of fragment ions derived from the segment having a Si-O bond is 0.05 or more and 10.00 or less, the peak intensities being measured by a time-of-flight secondary ion mass spectrometer (TOF-SIMS) under the following measurement conditions at a center part of a thickness of the coating layer.

<Measurement conditions>

Primary ion species: $Bi^+$ (2 pA, 50 $\mu$s)
Acceleration voltage: 25 kV
Detected ion polarity: positive
Measurement range: 100 $\mu$m $\times$ 100 $\mu$m
Resolution: 128 $\times$ 128
Etching ion species: $O^{2+}$ (2 keV, 170 nA)
Etching area: 300 $\mu$m $\times$ 300 $\mu$m
Etching rate: 1sec/cycle

(5) The laminated body according to (4), in which the metal element M contained in the coating layer contains at least one metal element of aluminum, titanium, and zirconium.
(6) The laminated body according to any one of (1) to (5), in which a ratio c/s of a peak intensity c of fragment ions derived from carbon and a peak intensity s of fragment ions derived from the segment having a Si-O bond is 0.015 or more and 0.650 or less, the peak intensities being measured by a time-of-flight secondary ion mass spectrometer (TOF-SIMS) at a center part of a thickness of the coating layer.
(7) The laminated body according to any one of (1) to (6), in which the laminated body satisfies $SF_{145°C} - SF_{121°C} \leq$ 2.50 MPa, where a stress at 121°C in a main orientation axis direction and a stress at 145°C in the main orientation axis direction, measured by thermomechanical analysis (TMA), are denoted respectively by $SF_{121°C}$ and $SF_{145°C}$.
(8) The laminated body according to any one of (1) to (7), in which tan$\delta$ of the main orientation axis direction at 145°C is 0.25 or less.
(9) The laminated body according to any one of (1) to (8), in which when an elongation at break of the main orientation axis direction is denoted as $T_0$ and an elongation at break of the main orientation axis direction as measured after the laminated body is heat-treated at 130°C for 10 minutes is denoted as $T_{130}$, a value of $T_0/T_{130}$ is 1.20 or less.
(10) The laminated body according to any one of (1) to (9), in which a free volume radius of pores in the coating layer is 0.260 nm or less, the free volume radius being determined by a positron annihilation method under the following measurement conditions.

<Measurement conditions>

Sample pretreatment: The laminated body is attached to a silicon wafer of 15 mm $\times$ 15 mm and vacuum degassed at 25°C.

Positron source: $^{22}$Na-based positron annihilation
$\gamma$-ray detector: Scintillator made of $BaF_2$ and photomultiplier tube
Beam intensity: 3keV
Measurement temperature: 25°C
Measurement atmosphere: Vacuum
Total number of counts: About 5,000,000 counts

The obtained positron annihilation lifetime curve is subjected to a three-component analysis by nonlinear least squares program POSITRONFIT to determine $\tau 1$, $\tau 2$, and $\tau 3$ from those having a small annihilation lifetime.

From the longest average annihilation lifetime $\tau 3$, the free volume radius R3 (nm) of pores is calculated using the following formula:

$$\tau 3 = (1/2)[1 - \{R3/(R3 + 0.166)\} + (1/2\pi)\sin$$

$$\{2\pi R3/(R3 + 0.166)\}]^{-1}$$

(11) The laminated body according to any one of (1) to (10), in which the polyolefin-based resin film contains polypropylene.

(12) The laminated body according to any one of (1) to (11), in which a thickness of the coating layer is 200 nm or more and 600 nm or less.

(13) The laminated body according to any one of (1) to (12), in which the metal layer or the inorganic compound layer contains aluminum.

(14) The laminated body according to any one of (1) to (13), in which a water vapor transmission rate of the laminated body is 1.0 $g/m^2/24$ hr or less and an oxygen transmission rate of the laminated body is 1.0 $cc/m^2/24$ hr or less.

(15) The laminated body according to any one of (1) to (14), in which the metal layer or the inorganic compound layer has direct contact with the polyolefin-based resin film.

(16) A packaging body including the laminated body according to any one of (1) to (15).

(17) A method for producing a laminated body having an inorganic layer on at least one surface of a polyolefin-based resin film, the producing method of forming a coating layer on a surface of the laminated body having an inorganic layer, the producing method including: a step of applying a coating agent containing a water-soluble resin and a hydrolysate of a metal alkoxide and/or a polycondensate thereof; and a step of drying the coating agent, in which a value of a ratio P1/P2 of the following peak intensities P1 and P2 is 3.5 or more and 8.0 or less, the peak intensities being detected by measuring the coating layer by a FT-IR-ATR method (total reflection Fourier transform infrared spectroscopy).

P1: an intensity of a maximum peak present at 1,050 to 1,080 $cm^{-1}$
P2: an intensity of a maximum peak present at 920 to 970 $cm^{-1}$

(18) A method for producing a laminated body, the producing method including: a step of applying a coating agent containing one or more selected from silicon alkoxide, a hydrolysate of silicon alkoxide, and a polycondensate of a hydrolysate of silicon alkoxide, one or more resins selected from a vinyl alcohol-based resin, a polysaccharide, and an acrylic polyol resin, and a compound containing a metal element M other than silicon Si to at least one outermost layer on an inorganic layer side of a laminated body having a polyolefin-based resin film and one or more inorganic layers; and a step of drying the coating agent, in which a ratio m/s of a peak intensity m of fragment ions derived from the metal element M and a peak intensity s of fragment ions derived from a segment having a Si-O bond is 0.05 or more and 10.00 or less, the peak intensities being measured for a film obtained by applying and drying the coating agent by a time-of-flight secondary ion mass spectrometer (TOF-SIMS).

(19) The method for producing a laminated body according to (17) or (18), in which the producing method includes a step of applying a coating agent containing one or more selected from silicon alkoxide represented by $Si(OR)_4$, a hydrolysate of silicon alkoxide represented by $Si(OR)_4$, and a polycondensate of a hydrolysate of silicon alkoxide represented by $Si(OR)_4$, one or more resins selected from a vinyl alcohol-based resin, a polysaccharide, and an acrylic polyol resin, and a compound containing a metal element M other than silicon Si to at least one outermost layer on an inorganic layer side of a laminated body having a polyolefin-based resin film and one or more inorganic layers, and a step of drying the coating agent.

R: Alkyl group

(20) The method for producing a laminated body according to any one of (17) to (19), in which a ratio c/s of a peak intensity c of fragment ions derived from carbon and a peak intensity s of fragment ions derived from a segment having a Si-O bond is 0.015 or more and 0.650, the peak intensities being measured for a film obtained through the step of applying a coating agent and the step of drying the coating agent by a time-of-flight secondary ion mass spectrometer (TOF-SIMS).

EFFECTS OF THE INVENTION

According to the present invention, it is possible to provide a laminated body which includes a metal layer and/or an inorganic compound layer and a coating layer laminated on a polyolefin-based resin film, is dense, and has good barrier properties, a packaging body, and a method for producing a laminated body.

BRIEF DESCRIPTION OF THE DRAWINGS

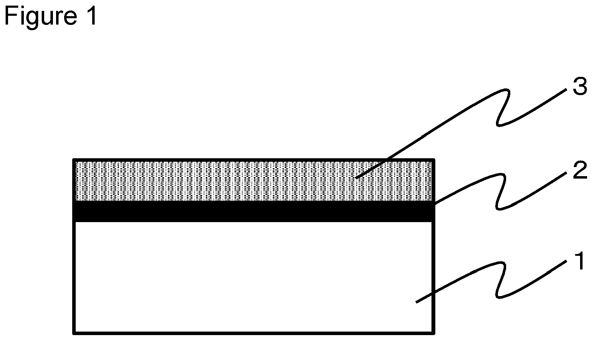

Fig. 1 is a schematic cross-sectional view illustrating a configuration of a laminated body of the present invention.

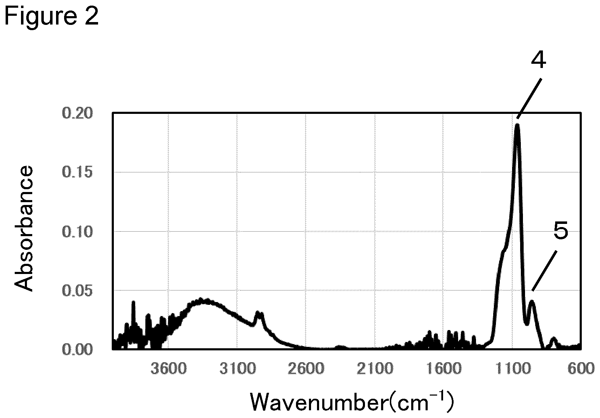

Fig. 2 shows an example of an IR spectrum obtained by analyzing a coating layer of the present invention by a FT-IR-ATR method.

EMBODIMENTS OF THE INVENTION

Hereinafter, preferred embodiments of a laminated body, a packaging body, and a method for producing a laminated body of the present invention will be described in more detail.

A polyolefin-based resin film in the present invention is a film containing, as a main component, a resin containing an olefin-based hydrocarbon as a main constituent unit. The main constituent unit refers to a monomer unit having the largest content (number unit) among monomer units contained in the resin, and the main component refers to a monomer unit having the largest content (% by mass) among all constituent components. Examples of the polyolefin-based resin include a polymer of an $\alpha$-olefin having an alkyl group in a side chain, such as propylene or 4-methyl-1-pentene, in addition to ethylene and a copolymer thereof, or a copolymer obtained by copolymerizing an $\alpha$-olefin with acrylic acid, a C=C bond-containing carboxylic acid, a C=C bond-containing carboxylic acid salt, a C=C bond-containing carboxylic acid alkyl ester, or the like, a polymer of norbornene or cyclodiene and a polymer thereof, and the polyolefin-based resin may be a single layer or a plurality of layers. Among these, polyethylene or polypropylene is preferably contained from the viewpoint of relatively low cost, polypropylene is more preferably contained from the viewpoint of heat resistance, and polypropylene is still more preferably contained as a main component from the same viewpoint. The film may be unstretched or stretched, but is preferably biaxially stretched from the viewpoint of thermal dimensional stability. That is, the film is preferably a biaxially oriented polyolefin-based resin film. The melting point of the polyolefin-based resin film is preferably 150°C or higher. By setting the melting point to 150°C or higher, thermal damage due to heat in a step of forming a metal oxide or processing into a packaging material configuration is prevented, and heat resistance after processing is also enhanced, so that deterioration of barrier properties can be suppressed. Note that, the melting point of the film can be measured by the following method by DSC (differential scanning calorimetry). With the use of a differential scanning calorimeter (EXSTAR DSC6220 manufactured by Seiko Instruments Inc.), 3 mg of the sample in a nitrogen atmosphere is heated from 30°C to 260°C at a heating rate of 20°C/min, then held at 260°C for 5 minutes, and then cooled to 30°C under the condition of 20°C/min. The resin composition is held at 30°C for 5 minutes, the temperature is then raised again from 30°C to 260°C at a rate of 20°C/min, and the peak temperature of the endothermic curve obtained at the time of the temperature rise again is defined as the melting point of the resin composition on the surface layer. In a case where multiple peak temperatures can be observed, the highest temperature is defined as the melting point of the resin composition of the surface layer.

The glass transition temperature (Tg) of the polyolefin-based resin film is preferably 50°C or lower. By adopting the present aspect, the flexibility of the film is enhanced even at a low temperature, and the film does not become hard even at a low temperature when the laminated body is formed into a packaging body, so that the film can be stably used in a wide temperature range.

The thickness of the polyolefin-based resin film is preferably 3 $\mu$m or more and 100 $\mu$m or less, more preferably 5 $\mu$m or more and 50 $\mu$m or less, and still more preferably 8 $\mu$m or more and 30 $\mu$m or less. When the thickness of the film is 3 $\mu$m or more, rigidity as a support can be maintained, and when the thickness is 100 $\mu$m or less, flexibility as a packaging material is maintained, and followability is improved, which is preferable. Note that, the thickness of the polyolefin-based resin film is determined by the method described in Examples.

The surface of the polyolefin-based resin film is preferably smooth. The surface smoothness can be expressed by an arithmetic mean height Sa defined in ISO25178 (2012), and Sa is preferably 50 nm or less and more preferably 30 nm or less. Sa can be measured by a non-contact surface observation device, for example, a scanning white-light interference microscope manufactured by Hitachi High-Tech Science Corporation, and in the present invention, Sa is obtained by the method described in Examples. By making the surface smooth, defects of the inorganic oxide layer laminated on the surface can be reduced, a good inorganic oxide layer can be obtained, and the barrier properties can be improved.

The laminated body in the present invention is a laminated body having an inorganic layer on at least one surface of a polyolefin-based resin film, and the inorganic layer preferably has a metal layer and/or an inorganic compound layer.

It is preferable that the metal layer and/or the inorganic compound layer contain one or more elements selected from Group 2 to Group 14 (provided that carbon is excluded) of the periodic table, and the inorganic compound layer is a layer further containing at least one of oxygen and nitrogen. Among them, from the viewpoint of processing cost and gas barrier properties, the metal layer preferably contains aluminum, and more preferably contains aluminum as a main component. From the same viewpoint, the inorganic compound layer preferably contains at least one or more selected from aluminum, magnesium, titanium, tin, indium, and silicon, and more preferably contains silicon or aluminum. Preferable examples of the inorganic compound layer include silicon oxide, silicon oxynitride, and aluminum oxide. In the inorganic oxide layer, the ratio of aluminum to a total of elements of Group 2 to Group 14 (provided that carbon is excluded) of the periodic table is preferably 50 atomic% or more.

In the case of having a metal layer, the thickness of the metal layer is preferably 5 nm or more and 500 nm or less and preferably 10 nm or more and 100 nm or less. By setting the thickness to 5 nm or more, the barrier properties can be improved, and by setting the thickness to 500 nm or less, thermal damage of the substrate during film formation can be suppressed, which is preferable.

In the case of having an inorganic compound layer, the thickness of the inorganic compound layer is preferably 2 nm or more and 50 nm or less, more preferably 2 nm or more and 20 nm or less, and still more preferably 4 nm or more and 10 m or less. By setting the thickness to 1 nm or more, defects such as pinholes of the inorganic compound layer can be reduced, and by setting the thickness to 50 nm or less, cracks can be suppressed, which is preferable.

Note that, the thickness of the metal layer or the inorganic compound layer is determined by the method described in Examples.

In the laminated body of the present invention, the metal layer and/or the inorganic oxide layer preferably has direct contact with the surface of the polyolefin-based resin film. In the present invention, "having direct contact" refers to an aspect in which another layer is not present between the polyolefin-based resin film and the inorganic oxide layer. Employing such an aspect improves the production cost and recyclability of the laminated body.

The coating layer in the present invention refers to at least one outermost layer of the laminated body, and is more preferably a layer laminated on a surface of the metal layer and/or the inorganic compound layer on a side opposite to the polyolefin-based resin. The coating layer is preferably a layer containing a water-soluble resin and a metal alkoxide and/or a hydrolysate of a metal alkoxide.

The water-soluble resin of the coating layer preferably contains one or more segments selected from a segment derived from a vinyl alcohol-based resin, a segment derived from a polysaccharide, and a segment derived from an acrylic polyol resin. Examples of the resin including a segment derived from a vinyl alcohol-based resin, a segment derived from a polysaccharide, and a segment derived from an acrylic polyol resin preferably include a vinyl alcohol-based resin, a polysaccharide such as methyl cellulose, and an acrylic polyol resin, and from the viewpoint that oxygen barrier properties can be further improved, a vinyl alcohol-based resin is preferable. Examples of the vinyl alcohol-based resin include a polyvinyl alcohol, an ethylene-vinyl alcohol copolymer, and a modified polyvinyl alcohol, and these resins may be used alone, or as a mixture of two or more thereof. The average molecular weight (in accordance with JIS K 6726 (1994)) of the vinyl alcohol-based resin is preferably 500 or more and 3,000 or less. When the molecular weight is small, the polymer is hardly fixed in the layer, and the barrier properties may be deteriorated.

The vinyl alcohol-based resin is typically obtained by saponifying a polyvinyl acetate, and may be partially saponified by saponifying some of acetic acid groups or completely saponified, but the degree of saponification is preferably higher. The degree of saponification (in accordance with JIS K 6727 (1994)) is preferably 90% or more and more preferably 95% or more. When the degree of saponification is high, the number of acetic acid groups having large steric hindrance is small, the free volume of the coating layer is reduced, and the degree of crystallinity of the resin is increased, which is advantageous for improving the barrier properties, which is preferable.

The modified polyvinyl alcohol-based resin of the present invention refers to one obtained by chemically reacting monomers having different chemical structures with polyvinyl alcohol, or one obtained by copolymerizing monomers having different chemical structures. Examples of the modified polyvinyl alcohol-based resin include vinyl ester-based resins such as vinyl acetate and vinyl propion, carboxylic acid-based resins, methacrylic acid ester-based resins, vinyl ether-based resins such as methyl vinyl ether, and glycol-based resins. For example, a modified polyvinyl alcohol-based resin containing a cyclic compound structure having a carbonyl group in a cyclic structure can be used. By having a cyclic compound structure having a carbonyl group, a film having a dense structure is formed by hydrophobization of the resin itself and interaction around the resin by the carbonyl group, and the water resistance of the coating layer is improved, and the water vapor barrier properties and the moisture resistance can be improved. The cyclic structure is not particularly limited as long as it is a 3-membered or higher-membered ring (for example, 3- to 6-membered ring), and may be a cyclic compound structure such as a heterocyclic ring having, for example, a hetero element such as nitrogen, oxygen, sulfur, or phosphorus other than carbon in the cyclic structure. The site having the cyclic compound structure may be present in any of the main chain, the side chain, and the crosslinked chain in the vinyl alcohol-based resin. Specific examples of the cyclic compound structure having a carbonyl group in the cyclic structure include a lactone structure which is a cyclic ester and a lactam structure which is a cyclic amide, these structures may be used singly or may include two or more kinds thereof, and the cyclic compound structure is not particularly limited, but a lactone structure is preferable. The lactone structure is stable with respect to an acid catalyst used for a high-temperature hot water treatment or hydrolysis of silicon alkoxide described later, and easily maintains gas barrier properties. Note that, the cyclic compound structure having a carbonyl group is preferably incorporated in the main chain of the modified polyvinyl alcohol-based resin. In the case of having the cyclic compound structure in the side chain, the free volume of the coating layer increases due to steric hindrance, so that the barrier properties may be deteriorated, but in the case of having the cyclic compound structure in a part of the main chain, the steric hindrance can be reduced, and the free volume of the coating layer is also reduced, so that it is advantageous for improving the barrier properties, which is preferable.

The segment derived from a vinyl alcohol-based resin, the segment derived from a polysaccharide, and the segment derived from an acrylic polyol resin contained in the coating layer can be analyzed by the following method.

The film piece is immersed in deuterated isopropanol to dissolve the coating layer composition in a solvent, or the coating layer is physically scraped using a spatula or the like. Whether or not the coating layer has been dissolved or whether or not the coating layer has been scraped off can be confirmed by measuring the film thickness of the coating layer in the same manner as in the film thickness evaluation method described later. Subsequently, the sample dissolved in the solvent is analyzed for $^{13}$C by liquid NMR or the sample scraped off is analyzed by solid NMR, and it is possible to confirm whether each segment is included by assigning each peak.

The metal alkoxide is one or more selected from silicon alkoxide represented by $Si(OR)_4$, a hydrolysate of silicon alkoxide, and a polycondensate of a hydrolysate of silicon alkoxide, which are a segment having a Si-O bond, and is represented by general formula $M(OR)_n$. In the formula, n is a natural number, and M is preferably a metal atom such as titanium, aluminum, or zirconium. Here, R is an alkyl group and is particularly preferably a lower alkyl group having 1 to 4 carbon atoms. In particular, for example, tetramethoxysilane, tetraethoxysilane, tetrapropoxysilane, and tetrabutoxysilane can be suitably used from the viewpoints of reactivity, stability, and cost, and these may be used alone, or as a mixture of two or more thereof. These metal alkoxides may be hydrolyzed or polycondensated for forming a network.

The hydrolysis and/or polycondensation of the metal alkoxide can proceed in the presence of water, a catalyst, and an organic solvent. Water used in the reaction is preferably 0.8 equivalents or more and 5 equivalents or less with respect to alkoxy groups of $Si(OR)_4$ and/or $M(OR)_n$. By setting the amount of water to 0.8 equivalents or more, hydrolysis can sufficiently proceed to form a network, which is preferable. By setting the amount of water to 5 equivalents or less, the degree of hydrolysis progress can be adjusted to suppress random network formation, and the free volume of the film is reduced to improve the barrier properties, which is preferable.

The catalyst used for the reaction of the metal alkoxide is preferably an acid catalyst. Examples of the acid catalyst include, but are not particularly limited to, hydrochloric acid, sulfuric acid, nitric acid, phosphoric acid, acetic acid, and tartaric acid. Usually, the hydrolysis and polycondensation reaction of the metal alkoxide can proceed with either an acid catalyst or a base catalyst. In the case of using an acid catalyst, a monomer in the system is likely to be hydrolyzed on average, and condensation is likely to proceed in a linear or network structure. On the other hand, in the case of using a base catalyst, a reaction mechanism in which a hydrolysis/polycondensation reaction of an alkoxide bonded to the same molecule easily proceeds is obtained, and thus the reaction product tends to have a large free volume and a granular shape with many voids. An acid catalyst is preferably used because voids in the film form a permeation path of water vapor and oxygen. The amount of the catalyst used is preferably 0.1 mol% or more and 0.05 mol% or less with respect to the total molar amount of the metal alkoxide.

As the organic solvent used for the reaction of the metal alkoxide, alcohols such as methyl alcohol, ethyl alcohol, n-propyl alcohol, isopropyl alcohol, and n-butyl alcohol which can be mixed with water and the metal alkoxide can be used.

Note that, as the polycondensate of the metal alkoxide, a commercially available silicate oligomer or polysiloxane can also be used. The silicate oligomer and the polysiloxane may be used singly or in combination with a low-molecular-weight metal alkoxide, but are preferably used in combination with a low-molecular-weight metal alkoxide in order to suppress occurrence of cracks due to excessive crosslinking. Also in the case of using a silicate oligomer or a polysiloxane, when a linear or network structure is selected, the free volume of the film is reduced and the barrier properties are easily improved, which is preferable.

The metal alkoxide contained in the coating layer is analyzed on the film surface using a FT-IR-ATR method, and it can be confirmed whether a segment having a Si-O bond and an M-O bond are contained by assigning each peak.

The coating layer of the present invention can be obtained by applying a coating agent obtained by mixing the water-soluble resin and the hydrolysis and/or polycondensate of the metal alkoxide to a metal layer and/or an inorganic compound layer and drying the coating agent. The ratio of the resin and the hydrolysate of the metal alkoxide and/or the polycondensate thereof contained in the coating layer is in a range of the mass of resin/metal alkoxide in terms of oxide of preferably 15/85 to 85/15, more preferably 20/80 to 65/35, still more preferably 20/80 to 40/60, and particularly preferably 20/80 to 50/50 in terms of the ratio of the mass of the metal alkoxide (in terms of $SiO_2$, $MO_n$) when the center atom is completely oxidized and the mass of the resin. By setting this ratio to 15/85 or more, it is possible to suppress the film from being weakened and then occurring of cracks by an excessive amount of the hydrolysate of the metal alkoxide and/or the polycondensate component, which is preferable. By setting this ratio to 85/15 or less, the resin can be immobilized by a network of the hydrolysate and/or the polycondensate of the metal alkoxide to suppress a decrease in water vapor barrier properties, which is preferable. From the same viewpoint, a ratio c/s of a peak intensity c of fragment ions derived from carbon and a peak intensity s of fragment ions derived from the segment having a Si-O bond is preferably 0.015 or more and 0.650 or less, the peak intensities being measured by a time-of-flight secondary ion mass spectrometer (TOF-SIMS) at a center part of a thickness of the coating layer. Note that, no pretreatment is particularly required as long as the coating layer is exposed on the outermost surface, but when other layers are formed on the coating layer, the analysis can be performed after the each layer is etched to the thickness thereof with various ions such as an argon ion beam or removed by a chemical treatment. The details of the measurement method are the same as the measurement of m/s described later.

In the coating layer of the present invention, a value of a ratio P1/P2 of peak intensities P1 and P2 detected by measuring the coating layer by a FT-IR-ATR method is preferably 3.5 or more and 8.0 or less, and more preferably 4.0 or more and 6.5 or less (provided that, the coating layer shows the intensity of the maximum peak present at P1: 1,050 to 1,080 $cm^{-1}$ and the intensity of the maximum peak present at P2: 920 to 970 $cm^{-1}$; the peak intensity is absorbance (unit: none) at the peak position). In the FT-IR-ATR method, the characteristics of the coating layer on the surface can be captured, P1 indicates Si-O-Si as a reaction product, and P2 indicates the amount of Si-OH as a reaction raw material. Therefore, the ratio P1/P2 of the peak intensities P1 and P2 increases as polycondensation of the metal alkoxide proceeds. When the polycondensation reaction of the metal alkoxide proceeds, the terminal OH is reduced to form a strong film, the barrier properties are improved, and the wet heat resistance at the time of retort treatment as a packaging material is also improved. When P1/P2 is 3.5 or more, the terminal OH is reduced to form a strong film, and a layer excellent in barrier properties and wet heat resistance can be obtained. By setting P1/P2 to 8.0 or less, cracks or embrittlement due to shrinkage of the film can be suppressed, which is preferable. P1 and P2 are determined by the method described in Examples.

In order to set the ratio P1/P2 of the peak intensities P1 and P2 detected by measurement by a FT-IR-ATR method within a preferred range, it is necessary to sufficiently progress the reaction of the metal alkoxide. Since polycondensation of the metal alkoxide is a dehydration reaction, the polycondensation can be advanced by heating, but the polyolefin-based resin film constituting the laminated body of the present invention has lower heat resistance than a conventional polyester-based resin, and thus there is a problem in that it is difficult to sufficiently advance the reaction. As a result of intensive studies, the inventors have succeeded in obtaining a film having appropriate characteristics even in low-temperature processing by mixing components capable of forming a network at a low temperature. It has been found that by adjusting P1/P2 to 3.5 or more and 8.0 or less, deterioration of barrier properties in the subsequent process can also be suppressed. When the laminated body of the present invention is used as a packaging material, the laminated body passes through a process of printing or package forming, and therefore is heated or pressurized. At this time, the coating moderately constituting the network can also function as a protective film, which is preferable. On the other hand, for example, when P1/P2 is less than 3.5, since there are many unreacted metal alkoxides, the coating layer cannot be cured and is easily damaged to deteriorate the barrier properties, or the unreacted metal alkoxide is cured and shrunk to deteriorate the barrier depending on processing conditions. On the other hand, when P1/P2 is more than 8.0, the coating layer becomes brittle, and cracks are likely to occur due to the pressure at the time of bonding or the conveyance tension, and the barrier properties may be deteriorated.

A change amount $\Delta$(P1/P2) of the value of the ratio P1/P2 of the peak intensities P1 and P2 detected by measuring the coating layer of the present invention by a FT-IR-ATR method before and after a heat treatment at 120°C for 1 minute is preferably -0.5 or more and 0.5 or less. Here, the change amount $\Delta$(P1/P2) is a value obtained by subtracting P1/P2 before the heat treatment from P1/P2 after the heat treatment. The heat treatment at 120°C for 1 minute refers to a treatment in which the sample is placed in an oven (for example, a thermostat safety oven SPHH-201 with a safety door manufactured by ESPEC CORP.) in a stable state at a set temperature of 120°C for 10 minutes or more under a laboratory environment of 23°C and 50% RH and taken out after 1 minute. There is a step of heating the laminated body of the present invention by post-processing such as printing, film bonding, and package forming. When the reaction of the metal alkoxide of the coating layer greatly proceeds by such heating, cracks may be generated due to curing shrinkage or embrittlement, and the barrier properties may be deteriorated. Therefore, the coating layer of the laminated body is required to have stability against heat. The change amount $\Delta$(P1/P2) of the peak ratio of FT-IR-ATR before and after the heat treatment of the coating layer of the present invention at 120°C for 1 minute is an index indicating the degree of progress of the reaction at the time of heating, and it can be said that the smaller this value is, the more stable it is to heat. By setting the change amount to -0.5 or more and 0.5 or less, stable characteristics can be obtained even in heating in the subsequent process, which is preferable. The formation of a sufficiently stable layer can be achieved by appropriately proceeding the reaction by the above-described method.

One of preferred embodiments of the present invention is an example in which two or more kinds of metal alkoxides and/or polycondensates thereof are contained in the coating layer. As described above, the hydrolysate of the metal alkoxide and/or the polycondensate thereof forming the coating layer is preferably a hydrolysate of silicon alkoxide or a polycondensate thereof from the viewpoint of a balance between liquid stability and reactivity. However, due to the stability of the silicon alkoxide, sufficient heat energy is required to sufficiently progress the reaction. Therefore, it has been found that, by mixing a highly reactive metal alkoxide $M(OR)_n$, both moderate reactivity and stability of the coating liquid can be achieved. A plurality of silicon alkoxides can be bonded to the highly reactive metal alkoxide, and the reaction can be promoted by bringing the silicon alkoxides close to each other via the central metal of the highly reactive metal alkoxide. That is, the highly reactive metal alkoxide reduces the active energy of the reaction between the silicon alkoxides, and can reduce the heat energy required for promoting the polycondensation. Preferable examples of the metal alkoxide to be mixed include alkoxides of aluminum, titanium, and zirconium. In order to ensure the coating liquid stability in the case of adding these compounds, it is preferable to mix them as a chelate, and examples thereof include aluminum tris(ethyl acetoacetate), aluminum monoacetylacetonate bis(ethyl acetoacetate), titanium lactate, titanium diethanolaminate, diisopropoxytitanium bis(triethanolaminate), and zirconium lactate. Among them, a titanium chelate capable of obtaining stability even with a small ligand is preferable because an increase in free volume derived from the ligand can be suppressed when the ligand residue after the reaction is small. The metal alkoxide to be mixed is preferably 0.1% by mass or more and 15% by mass or less with respect to a hydrolysate of silicon alkoxide and/or a polycondensate thereof. When the content is 0.1% or more, the effect of accelerating the reaction can be obtained, and when the content is 15% by mass or less, the stability of the coating liquid can be maintained.

Another preferred embodiment of the present invention includes an example in which the coating layer contains a compound having a plurality of alkoxysilyl groups. Examples of the compound having a plurality of alkoxysilyl groups include tris-(3-trimethoxysilylpropyl)isocyanate, bis-(3-trimethoxysilylpropyl)amine, N,N'-bis[3-(trimethoxysilyl)propyl] ethane-1,2-diamine, and 1,8-bis(triethoxysilyl)octane. The compound having a plurality of alkoxysilyl groups can be bonded to a metal alkoxide at a plurality of points by one molecule to form a two-dimensionally spreading network structure, so that the metal alkoxide can be immobilized. As a result, a point at which the molecular chain is immobilized is formed, and the encounter probability of the reaction point between the molecular chains is increased, so that the reaction of the metal alkoxide can proceed as a whole. The compound having a plurality of alkoxysilyl groups is preferably contained in an amount of 0.5% by mass or more and 30% by mass or less with respect to the total mass of the hydrolysate of the metal alkoxide and/or the polycondensate thereof. When the compound having a plurality of alkoxysilyl groups is containing in an amount of 0.5% by mass or more, it is possible to form a network and sufficiently react the metal alkoxide to obtain a coating layer excellent in wet heat resistance. When the amount of the compound having a plurality of alkoxysilyl groups is set to 30% by mass or less, it is possible to avoid that a large number of networks are formed in the coating liquid to increase the viscosity of the coating liquid, or the coating liquid is solidified and cannot be applied.

Another preferred embodiment of the coating layer is a layer containing one or more segments selected from a segment derived from a vinyl alcohol-based resin, a segment derived from a polysaccharide, and a segment derived from an acrylic polyol resin, and a segment having a Si-O bond and a metal element M.

The segment derived from a vinyl alcohol-based resin, the segment derived from a polysaccharide, and the segment derived from an acrylic polyol resin are the above-described water-soluble resins, and the segment having a Si-O bond is one or more selected from silicon alkoxide represented by $Si(OR)_4$, a hydrolysate of silicon alkoxide, and a polycondensate of a hydrolysate of silicon alkoxide among the above-described metal alkoxides.

The metal element M contained in the coating layer excludes silicon Si. When the coating layer has the metal element M, the coating layer can be made dense. The denseness can be evaluated by the free volume radius of pores obtained by a positron annihilation method described later. It is considered that the reason why the coating layer can be made dense by having the metal element M in the coating layer is that a compound containing the metal element M moderately enters the repetition of the Si-O bond, so that a moderate degree of freedom is generated in the bond, and it is possible to suppress very fine structural defects or cracks as compared with the repetition of only the Si-O bond.

The compound containing the metal element M is preferably a complex (chelate) or alcoholate of at least one metal element among at least one metal other than silicon and a metalloid metal element, and may contain two kinds of metal elements. The metal element M preferably contains a metal element having an empty orbit, and the sum of the element ratios of the metal elements having an empty orbit in 100 atom% of the sum of the metal element M (excluding silicon) is preferably 80 atom% or more. The metal element M preferably contains at least one metal element of aluminum, titanium, and zirconium, the sum of element ratios of aluminum, titanium, and zirconium is more preferably 80 atom% or more in 100 atom% of the sum of the metal element M (excluding silicon), the metal element M is still more preferably composed of only at least one selected from aluminum, titanium, and zirconium, the sum of element ratios of titanium and zirconium is particularly preferably 80 atom% or more in 100 atom% of the sum of the metal element M (excluding Si), and the metal element M is most preferably composed of zirconium and/or titanium Ti.

Examples of the chelate or alcoholate containing an aluminum element include aluminum tris(acetyl acetonate), aluminum monoacetylacetonate bis(ethyl acetoacetate), aluminum-di-n-butoxide-monoethylacetoacetate, aluminum-di-iso-propoxide-monomethylacetoacetate, and aluminum tris(ethylacetoacetate).

Examples of the chelate or alcoholate containing a titanium element include titanium orthoesters such as tetra-n-butyl titanate, tetraisopropyl titanate, butyl titanate dimer, tetra(2-ethylhexyl)titanate, and tetramethyl titanate; and titanium chelates such as titanium acetylacetonate, titanium tetraacetylacetonate, polytitanium acetylacetonate, titanium octylene glycolate, titanium lactate, titanium triethanolaminate, and titanium ethylacetoacetate.

Examples of the chelate or alcoholate containing a zirconium element include zirconium acetate, zirconium normal propylate, zirconium normal butyrate, zirconium tetraacetylacetonate, zirconium monoacetylacetonate, and zirconium bisacetylacetonate.

In order to ensure the coating liquid stability in the case of adding these compounds, it is preferable to mix them as a chelate, and examples thereof include aluminum tris(ethyl acetoacetate), aluminum monoacetylacetonate bis(ethyl acetoacetate), titanium lactate, titanium diethanolaminate, diisopropoxytitanium bis(triethanolaminate), and zirconium lactate. Among them, a titanium chelate capable of obtaining stability even with a small ligand is preferable because an increase in free volume derived from the ligand can be suppressed when the ligand residue after the reaction is reduced.

The polycondensate of silicon alkoxide forming the coating layer needs to sufficiently progress the reaction from the viewpoint of barrier properties. Therefore, by mixing a highly reactive metal chelate, both moderate reactivity and stability of the coating liquid can be achieved.

In the coating layer in the present invention, a ratio m/s of a peak intensity m of fragment ions derived from the metal element M and a peak intensity s of fragment ions derived from the segment having a Si-O bond is preferably 0.05 or more and 10.00 or less, the peak intensities being measured by a time-of-flight secondary ion mass spectrometer (TOF-SIMS) at a center part of a thickness of the coating layer.

The ratio m/s of the peak intensity m of fragment ions derived from the metal element M and the peak intensity s of fragment ions derived from the segment having a Si-O bond is determined by the following method, the peak intensities being measured by a time-of-flight secondary ion mass spectrometer (TOF-SIMS).

<Apparatus and measurement conditions>

Time-of-flight secondary ion mass spectrometer TOF-SIMS5 manufactured by IONTOF GmbH

<Measurement conditions>

Primary ion species: $Bi^+$ (2 pA, 50 $\mu$s)
Acceleration voltage: 25 kV
Detected ion polarity: positive
Measurement range: 100 $\mu$m $\times$ 100 $\mu$m
Resolution: 128 $\times$ 128
Etching ion species: $O^{2+}$ (2 keV, 170 nA)
Etching area: 300 $\mu$m $\times$ 300 $\mu$m
Etching rate: 1sec/cycle.

<Identification of coating layer center part>

The film thickness of the coating layer is calculated by the film thickness calculation method described in Examples, and 1/2 of the film thickness is denoted as the center part. Next, a portion of the coating layer corresponding to the film thickness is analyzed while being etched under the above measurement conditions. The measured crater depth of the analyzed sample is determined using a probe type step profiler (Dektak XTL manufactured by Bruker). The obtained depth is converted using an average etching rate obtained by dividing the obtained depth by an etching time, and the value at the center part is read. Note that, when there is no TOF-SIMS measurement data of a portion that is exactly 1/2 of the film thickness, TOF-SIMS measurement data of a measurement point closest to the portion that is 1/2 of the film thickness is used. When there is more than one measurement point closest to the portion that is 1/2 of the film thickness, the average value of m/s obtained from the measurement data of each measurement point is taken as m/s of the portion that is 1/2 of the film thickness.

<Pretreatment conditions>

When the coating layer is exposed to the outermost surface, no pretreatment is particularly required, but when another layer is formed on the coating layer, the coating layer is analyzed after these layers are removed. In the method of removing the layer formed on the coating layer, a portion of each layer corresponding to the film thickness can be removed by various ion etching such as argon ion beam or chemical treatment. The film thickness of each layer is determined by the method described in Examples.

<Analysis method>

Raw data is read using time-of-flight secondary ion mass spectrometer TOF-SIMS5 measurement software SURFACE LAB 7.1 manufactured by IONTOF GmbH, and peaks attributed to various ions are read from a mass spectrum.

When m/s is 0.05 or more, the reaction promoting effect can be obtained even under low-temperature processing conditions, the coating layer can be made dense by the effect of the metal element M, and a layer excellent in barrier properties and wet heat resistance can be obtained. m/s is more preferably 0.30 or more and still more preferably 0.50 or more. When m/s is 0.05 or more, the amount of the metal element M present in the coating layer can be set to a certain amount or more, and the metal element M acts as a catalyst, so that the reaction promoting effect can be obtained even under low-temperature processing conditions.

Note that, the denseness can be evaluated by the free volume radius of pores obtained by a positron annihilation method described later. It is considered that the reason why the coating layer can be made dense by setting m/s to 0.05 or more is that a compound containing the metal element M moderately enters the repetition of the Si-O bond, so that a moderate degree of freedom is generated in the bond, and it is possible to suppress very fine structural defects or cracks as compared with the repetition of only the Si-O bond. In addition, it is considered that when the coating layer has the metal element M in a case where the coating layer has one or more segments selected from a segment derived from a vinyl alcohol-based resin, a segment derived from a polysaccharide, and a segment derived from an acrylic polyol resin and m/s is 0.05 or more, affinity between a structure caused by a Si-O bond and a structure caused by the segment is increased, and it is possible to suppress very fine structural defects or cracks.

The metal element M preferably easily forms a chelate. When a chelate is formed, the stability can be achieved in a coating liquid state while securing reactivity. Examples of such a metal element include aluminum, titanium, and zirconium. In the case of using a metal chelate containing the metal element M, it is preferable to have a vacant coordination site that is equal to the difference between the valence and the coordination number. That is, the metal chelate functions as a Lewis acid. The vacant coordination site is electronically unstable, and the moiety is easily attacked, so that reactivity is improved, and the reaction promoting effect at a lower temperature can be obtained. Since a plurality of silicon alkoxides can be bonded to the metal chelate containing the metal element M, the reaction between adjacent silicon alkoxides can be promoted. That is, since the highly reactive metal chelate reduces the active energy of the reaction between the silicon alkoxides, and can reduce the heat energy required for promoting the polycondensation, the reaction promoting effect at a lower temperature can be obtained.

m/s is preferably 10.00 or less. When m/s is 10.00 or less, the amount of the metal element M in the coating layer can be prevented from becoming excessive, and the reactivity in a coating liquid state can be controlled, so that the stability of the coating liquid can be maintained. In the periphery where the metal element M is present in the coating layer, from a microscopic viewpoint, the degree of freedom of bonding is increased by the metal element M, and thus it is considered that when a large amount of the metal element M is present, denseness is deteriorated. From this viewpoint, when m/s is 10.00 or less, the barrier properties can be improved. In the case of using a metal chelate containing the metal element M, since the ligand residue after the reaction may remain in the coating layer, by setting m/s to 8.00 or less, it is possible to prevent the ligand residue from becoming excessive, and eventually, it is possible to suppress an increase in free volume of the coating layer and to make the barrier properties more excellent. From the same viewpoint, m/s is still more preferably 1.80 or less, and m/s is particularly preferably 1.00 or less.

Note that, when a plurality of metal elements (excluding silicon) are contained, m/s in each metal element is calculated, and the sum thereof is taken as m/s of the coating layer.

The laminated body of the present invention uses a polyolefin-based resin film as a substrate so that the packaging material can be recovered and recycled. The polyolefin-based resin film has a lower glass transition temperature than a conventional polyester-based resin or polyamide-based resin. Therefore, even while the film is stored in a roll, the film shrinks due to a change in ambient temperature, and the film tends to be tightly wound. At that time, the coating layer is strongly pressed against the back surface of the film wound on the outside, and there is a problem in that the coating layer is more easily deteriorated than a conventional resin substrate. As a result of intensive studies on this problem, it has been found that when the value of the ratio P1/P2 of the peak intensities P1 and P2 detected by measurement by a FT-IR-ATR method is set to 3.5 or more and 8.0 or more, the ratio m/s of the peak intensity m of fragment ions derived from the metal element M and the peak intensity s of fragment ions derived from the segment having a Si-O bond as measured by a time-of-flight secondary ion mass spectrometer (TOF-SIMS) at the center part of the thickness of the coating layer is set to 0.05 or more and 10.00 or less, or both of these requirements are satisfied, the barrier deterioration can be suppressed even when winding tightness occurs in a polyolefin-based resin film. When P1/P2 is 3.5 or more, significant shrinkage due to additional curing can be reduced, and application of stress to the film can be suppressed, when m/s is 0.05 or more, the reaction promoting effect can be obtained even under low-temperature processing conditions, and thus low temperature processing can be performed, and application of stress to the film due to shrinkage of the coating layer due to additional curing can be suppressed, and when P1/P2 is 8.0 or less and/or m/s is 10.00 or less, the progress of excessive reaction can be controlled, embrittlement of the coating layer can be suppressed, and barrier deterioration when the film is pressed by winding tightness can be suppressed.

It is preferable for the laminated body of the present invention to satisfy $SF_{145°C}$ - $SF_{121°C} \leq 2.50$ MPa, where a stress at 121°C in the main orientation axis direction and a stress at 145°C in the main orientation axis direction, measured by thermomechanical analysis (TMA), are denoted respectively by $SF_{121°C}$ and $SF_{145°C}$. The main orientation axis direction of the laminated body refers to a direction in which the stress of the maximum point strength obtained from the maximum load until fracture is maximized, determined when a rectangular sample of 50 mm in length (measurement direction) $\times$ of 10 mm in width is pulled in the measurement direction at a tensile speed of 300 mm/min at room temperature, and details of the determination method are as described in Examples. Satisfying $SF_{145°C}$ - $SF_{121°C} \leq 2.50$ MPa allows defects such as pinholes and cracks to be kept from being generated in the inorganic oxide layer due to deformation of the laminated body by heat when the laminated body of the present invention is subjected to post-processing including a high-temperature treatment such as heat sealing. As a result, the laminated body becomes capable of maintaining the excellent water vapor barrier properties.

Satisfying $SF_{145°C}$ - $SF_{121°C} \leq 2.50$ MPa means small shrinkage stress in a high-temperature range of 121°C or higher. In the case of small shrinkage stress in a high-temperature range of 121°C or higher, the shrinkage stress is further reduced in a temperature range from lower than 121°C to room temperature, thereby extremely reducing the dimensional change with time. Therefore, when the laminated body of the present invention is subjected to package forming processing, dimensional stability is improved, so that deterioration of quality due to deformation during printing, lamination, or package forming processing can be reduced. In particular, at the time of heat sealing of package forming processing, wrinkles and shrinkage of the heated portion are suppressed, and the yield of the final product is also increased, which is preferable. Also when the laminated body of the present invention is stored in a roll for a long period of time, it can be expected that deformation of the roll, for example, occurrence of wrinkles (winding tightness) is suppressed.

From the viewpoint mentioned above, the upper limit of $SF_{145°C}$ - $SF_{121°C}$ is preferably 2.00 MPa, more preferably 1.80 MPa, still more preferably 1.70 MPa, particularly preferably 1.50 MPa. Further, $SF_{145°C}$ - $SF_{121°C}$ is preferably as small as possible, and the lower limit is not particularly limited, but is substantially about 0.05 MPa.

$SF_{145°C}$ and $SF_{121°C}$ can be read from thermal shrinkage stress curves obtained by performing thermomechanical analysis under the temperature conditions and load conditions shown in Examples. The thermomechanical analyzer is not particularly limited as long as the analyzer is capable of the measurement, and can be appropriately selected, and for example, TMA/SS 6000 (manufactured by Seiko Instruments Inc.) or the like can be used.

The method for controlling $SF_{145°C}$ - $SF_{121°C}$ of the laminated body to 2.50 MPa or less or in the preferred range mentioned above is not to be considered particularly limited, and examples thereof include a method of adjusting conditions for a tenter device in the formation of the polypropylene-based resin film constituting the laminated body. More specific examples thereof include a method of setting the lower limit of the heat treatment temperature of the tenter to be 140°C, more preferably 150°C, still more preferably 155°C, particularly preferably 161°C, and the upper limit thereof to be 167°C, more preferably 166°C, still more preferably 165°C; and a method of setting the lower limit of the relax ratio to be 2%, more preferably 5%, still more preferably 7%, particularly preferably 9%, and the upper limit thereof to be 20%, more preferably 18%, still more preferably 17%, particularly preferably 15%. When the heat treatment temperature of the tenter is set to be 168°C or higher, relaxing molecular chains strongly oriented in the main orientation axis direction may make it difficult to control $SF_{145°C}$ - $SF_{121°C}$ to 2.50 MPa or less. In addition, the examples also include, for the polypropylene-based resin composition constituting the polypropylene-based resin film, a method of setting the molecular weight distribution Mz/Mw to be 1.5 or more and 4.5 or less, and a method of setting the differential distribution value obtained when the logarithmic molecular weight Log (M) is 6.5 to be 1.0% or more and 10% or less. It is to be noted that these methods are not considered as essential requirements, and can be combined appropriately. Note that, Mz is a Z-average molecular weight, and Mw is a weight average molecular weight. The logarithmic molecular weight Log(M) is obtained by taking the common logarithm of the polymer molecular weight M.

In the laminated body of the present invention, the tan$\delta$ of the main orientation axis direction at 145°C is preferably 0.25 or less. The tan$\delta$, which is also referred to as loss tangent, correlates with the degree of mobility of the molecular chain of the resin constituting the laminated body, and generally increases as the temperature increases in a range of 100°C or higher. The tan$\delta$ of the main orientation axis direction at 145°C is an index that correlates with the degree of mobility of the molecular chain in the film at around 145°C. Reducing this value, in other words, suppressing the movements of the molecular chains at high temperatures suppresses the thermal shrinkage stress of the laminated body under high temperatures, thereby making it easy to satisfy $SF_{145°C} - SF_{121°C} \leq 2.50$ MPa, where the stress at 121°C in the main orientation axis direction and the stress at 145°C in the main orientation axis direction, measured by thermomechanical analysis (TMA), are denoted respectively by $SF_{121°C}$ and $SF_{145°C}$. From the viewpoint mentioned above, the $\tan\delta$ of the main orientation axis direction at 145°C is preferably 0.23 or less, more preferably 0.21 or less, still more preferably 0.19 or less. Further, the $\tan\delta$ of the main orientation axis direction at 145°C is preferably as small as possible, and the lower limit thereof is not particularly limited, but is substantially about 0.01. The $\tan\delta$ can be determined from a viscoelasticity-temperature curve until reaching 180°C from -100°C after the start of temperature rise after low-temperature cooling to -100°C, and details of the measurement method are as described in Examples.

The method for setting the $\tan\delta$ of the main orientation axis direction of the laminated body at 145°C to be 0.25 or less is not particularly limited, and examples thereof include a method of reducing the molecular weight distribution Mz/Mw of the resin composition constituting the polypropylene-based film, a method of performing a heating relaxation treatment after uniaxial stretching in a step of forming the polypropylene-based resin film, a method of increasing the heat treatment temperature of the tenter, and a method of increasing the relaxation ratio of the tenter. Using these methods alone or in appropriate combination allows the $\tan\delta$ to be reduced.

In the laminated body of the present invention, when the elongation at break of the main orientation axis is denoted as $T_0$ and the elongation at break of the main orientation axis direction as measured after the laminated body is heat-treated at 130°C for 10 minutes is denoted as $T_{130}$, a value of $T_0/T_{130}$ is preferably 1.20 or less. The elongation at break is the maximum elongation at break when a rectangular sample of 150 mm in length $\times$ 10 mm in width is prepared with the main orientation axis direction as a long side and pulled in the measurement direction at a tensile speed of 300 mm/min at room temperature. The elongation at break is determined as $(l-l_0)/l_0 \times 100$, where the sample length before the test is denoted as $l_0$ and the length at break is denoted as l. In the present invention, the fact that the value of $T_0/T_{130}$ is 1.20 or less indicates that the change from before the heat treatment is small even after the heat treatment at 130°C for 10 minutes and the thermal damage at the time of production is small. The heat treatment at 130°C for 10 minutes refers to a treatment in which the sample is placed in an oven (for example, a thermostat safety oven SPHH-201 with a safety door manufactured by ESPEC CORP.) in a stable state at a set temperature of 130°C for 10 minutes or more under a laboratory environment of 23°C and 50% RH and taken out after 10 minutes. By setting $T_0/T_{130}$ to 1.20 or less, the thermal damage at the time of producing the laminated body can be suppressed, and good barrier properties can be exhibited. The winding tightness of the polyolefin-based resin film can be suppressed to suppress a decrease in barrier properties. The lower limit of $T_0/T_{130}$ is substantially 0.5.

In order to set the ratio $T_0/T_{130}$ of the elongation at break in the main orientation axis direction before and after the heat treatment of the laminated body of the present invention at 130°C for 10 minutes to 1.20 or less, it is preferable not to expose the laminated body to a high temperature in the production process. For example, in the case of using a polypropylene resin as a polyolefin-based resin film to be a substrate film, the polyolefin-based resin film is easily affected by heat, and due to exposure to a high temperature, the crystal structure is deformed or orientation is relaxed, so that the elongation at break is reduced. When the laminated body is exposed once to a high temperature and the structure of the polymer collapses, the elongation at break further decreases when the laminated body is exposed to a high temperature again. That is, in the case of a laminated body produced without being exposed to a high temperature, a decrease in $T_{130}$ is small, and the value of $T_0/T_{130}$ is 1.20 or less, whereas in the case of a laminated body produced at a high temperature, a decrease in $T_{130}$ is remarkable, and $T_0/T_{130}$ is a value exceeding 1.20. As a step in which the laminated body is exposed to a high temperature in the production of the laminated body of the present invention, there are a step of laminating a metal layer or a metal oxide layer and a step of laminating a coating layer. As described later, a known method such as a vapor deposition method can be applied to the step of laminating a metal layer or a metal oxide layer. In this step, a main roll can be cooled to suppress damage to the substrate, and processing is performed at a very high speed, so that the thermal influence can be relatively suppressed. On the other hand, in the step of laminating a coating layer or allowing the reaction to proceed, drying of a coating liquid and heating for allowing the reaction of the coating layer to proceed cannot be avoided, and thus the influence on the substrate is large. From the viewpoint of thermal damage, a preferable temperature range of the drying step of the coating layer is, for example, 130°C or lower, more preferably 120°C or lower, and still more preferably 110°C or lower. In order to improve the barrier properties of the coating layer, the treatment temperature is preferably 100°C or lower and more preferably 80°C or lower for suppressing thermal damage as much as possible even in the case of further heat treatment after drying. When the treatment time is 14 days or less, thermal damage is suppressed, which is also preferable from the viewpoint of production efficiency.

In the coating layer of the present invention, the free volume radius of pores determined by a positron annihilation method is preferably 0.260 nm or less. The positron beam method is one of the positron annihilation lifetime measurement methods, and is a technique for measuring a time period (from several hundreds of picoseconds to several tens of nanoseconds) after entering of a positron into a sample until its annihilation, and non-destructively evaluating information related to sizes of holes of about 0.1 to 10 nm and their number concentration and further size distribution based on the annihilation lifetime. The positron beam method is significantly different from a normal positron annihilation method in that a positron beam is used instead of a radioisotope ($^{22}$Na) as a positron source, and is a technique making it possible to measure a thin film formed with a thickness of several hundred nm on a silicon or quartz substrate. From the obtained measured values, an average pore radius and the number concentration of holes can be obtained by the nonlinear least squares program POSITRONFIT.

When the free volume radius of the coating layer is 0.260 nm or less, the coating layer is a dense layer with a small pore size, so that barrier properties are improved. The lower limit of the free volume radius is not particularly limited, and is preferably 0.240 nm or more from the viewpoint of ease of cracking.

Examples of the method for reducing the free volume radius include controlling the bonding state of the silicon alkoxide described above. The silicon alkoxide immobilizes the resin described above so as to become a hydrolysis and polycondensation product. At that time, hydrolysis conditions, that is, the use of an acid as a hydrolysis catalyst, form a linear or network structure and reduce the free volume radius.

As another method, it is also effective to sufficiently progress the polycondensation reaction of the silicon alkoxide to form a network structure and fix the resin in order to reduce the free volume radius. When a large amount of unreacted silicon alkoxide remains, the unreacted part has a high degree of freedom of motion, and the free volume increases. In order to sufficiently advance the reaction of the silicon alkoxide, a silicate oligomer or polysiloxane can be used as a part of a raw material, or sufficient heat energy can be applied in drying after coating or heat treatment of the laminated body. However, since the polyolefin-based resin film constituting the laminated body of the present invention has lower heat resistance than a conventional polyester-based resin, it is difficult to reduce the free volume radius by a heat treatment at a high temperature.

It is also effective not to use a compound having a structure with large steric hindrance in order to reduce the free volume radius. For example, when the degree of saponification of the vinyl alcohol-based resin is low, many acetic acid groups having large steric hindrance are present in the vinyl alcohol-based resin instead of hydroxyl groups. When an acetic acid group is present, the free volume may be increased due to steric hindrance thereof, and thus the degree of saponification is preferably high. From the same viewpoint, even when a compound having a plurality of alkoxysilyl groups is added, the ligand is preferably small, and it is also important to set the ligand so as not to be excessively added so that the excess component does not expand the free volume. Also in the metal chelate containing the metal element M, the ligand preferably has a small structure. When the ligand residue after the reaction is small, an increase in free volume derived from the ligand can be suppressed, which is preferable.

From the above viewpoint, in the present invention, the coating layer preferably contains a metal chelate compound containing a metal element M having a molecular weight of 100 or more and 1000 or less, and the coating layer more preferably contains a metal chelate compound containing a metal element M having a molecular weight of 200 or more and 500 or less.

The thickness of the coating layer of the present invention is preferably 200 nm or more and 600 nm or less and more preferably 320 nm or more and 500 nm or less. When the thickness is 200 nm or more, the metal layer and/or the metal compound layer can be coated without defects, and the barrier properties can be improved. When the thickness is 600 nm or less, cracks due to thermal shrinkage during curing and insufficient curing can be prevented, which is preferable. Note that, the thickness of the coating layer is determined by the method described in Examples.

The water vapor transmission rate of the laminated body of the present invention is preferably $1.0 \text{ g/m}^2/24 \text{ hr}$ or less and more preferably $0.5 \text{ g/m}^2/24 \text{ hr}$ or less. The oxygen transmission rate is preferably $1.0 \text{ cc/m}^2/24 \text{ hr}$ or less and more preferably $0.3 \text{ cc/m}^2/24 \text{ hr}$ or less. The water vapor transmission rate and the oxygen transmission rate are preferably as low as possible, and the lower limits thereof are not particularly limited, but the water vapor transmission rate is substantially $0.01 \text{ g/m}^2/24 \text{ hr}$, and the oxygen transmission rate is substantially $0.01 \text{ cc/m}^2/24 \text{ hr}$. By setting the water vapor transmission rate to $1.0 \text{ g/m}^2/24 \text{hr}$ or less and the oxygen transmission rate to $1.0 \text{ cc/m}^2/24 \text{ hr}$ or less, the contents when the laminated body is formed into a packaging body can be prevented from being deteriorated due to moisture absorption or oxidation, which is preferable.

The laminated body of the present invention can be obtained by forming a metal layer and/or an inorganic compound layer on at least one surface of a polyolefin-based resin film, and then further laminating a coating layer. The metal layer and/or the inorganic compound layer can be formed by using a known method such as a vacuum vapor deposition method, a sputtering method, an ion plating method, or a plasma vapor phase growth method, and in particular, a vapor deposition method can be suitably used from the viewpoint of being capable of forming a film at high speed with high productivity. Examples of a vapor deposition method of a vacuum vapor deposition method include an electron beam (EB) vapor deposition method, a resistance heating method, and an induction heating method, but are not limited thereto. Note that, when a metal layer and/or an inorganic compound layer is formed on a pair of long resin film rolls, the main roll for vapor deposition is preferably cooled for preventing thermal damage to the film, and the temperature thereof is preferably 20°C or lower, more preferably 0°C or lower. Examples of the method for obtaining the metal layer include vapor deposition using a target metal as a raw material. Examples of the method for obtaining the inorganic compound layer include a method in which a compound having a desired composition is deposited as a raw material, and a method in which a metal is used as a raw material, and a reaction gas is introduced into the deposited metal vapor to obtain an inorganic compound. For example, when an aluminum oxide layer is obtained, aluminum is used as a vapor deposition raw material, and a gas containing oxygen is introduced into evaporated aluminum vapor to form an inorganic oxide layer on the film. The gas to be introduced may contain a gas having a composition that reacts with the evaporated metal and is taken into the layer, and may contain an inert gas or the like for layer quality control. The surface of the resin film on which the metal layer and/or the inorganic compound layer is formed may be subjected to a surface modification treatment in order to improve interlayer adhesion. The surface modification treatment may be performed in-line or off-line, and the modification treatment method is not particularly limited, and examples thereof include known methods such as a corona treatment, a plasma treatment, an ion beam treatment, and a frame treatment. These surface modification treatments may be performed under an atmosphere of various gases such as argon, nitrogen, oxygen, carbon dioxide, hydrogen, ammonia, and hydrocarbon ($C_nH_{2n+2}$, provided that, n is an integer of 1 to 4), or a mixed gas thereof in addition to the atmosphere. The gas for use in the surface modification treatment can be selected depending on the ease of discharge, the energy of active species obtained, and the type of the functional group desired to be introduced, but it is preferable to contain, for introducing the functional group, a carbon dioxide gas or an oxygen gas, and argon or nitrogen, which is likely to be stably discharged.

The laminated body of the present invention is preferably produced by a producing method including a step of applying a coating agent containing a water-soluble resin and a hydrolysate of a metal alkoxide and/or a polycondensate thereof to a surface of the laminated body having an inorganic layer, the laminated body having the inorganic layer on at least one surface of a polyolefin-based resin film, and a step of drying the coating agent. The laminated body is preferably obtained by a method for producing a laminated body, including a step of applying a coating agent containing one or more selected from silicon alkoxide, a hydrolysate of silicon alkoxide, and a polycondensate of a hydrolysate of silicon alkoxide, one or more resins selected from a vinyl alcohol-based resin, a polysaccharide, and an acrylic polyol resin, and a compound containing a metal element M to at least one outermost layer on an inorganic layer side of a laminated body having a polyolefin-based resin film and one or more inorganic layers, and a step of drying the coating agent. By adopting the present aspect, a laminated body which is dense and has good barrier properties can be obtained. It is possible to obtain a laminated body having high water vapor barrier properties and oxygen barrier properties while suppressing the environmental load at the time of production. In particular, by adopting the present aspect, sufficient curing can be performed even at a low temperature, and sufficient curing can be performed particularly in a short time even at a high temperature, so that the environmental load at the time of production can be reduced, which is preferable.

In the method for producing a laminated body, from the viewpoint of obtaining a laminated body having high water vapor barrier properties and oxygen barrier properties, the silicon alkoxide is more preferably the silicon alkoxide represented by $Si(OR)_4$ described above. From the same viewpoint, the coating agent more preferably contains a vinyl alcohol-based resin. As the compound containing the metal element M, a metal chelate compound containing a metal element M having a molecular weight of 100 or more and 1000 or less is preferably contained, and a metal chelate compound containing a metal element M having a molecular weight of 200 or more and 500 or less is more preferably contained. From the viewpoint of the water vapor barrier properties and the oxygen barrier properties, the ratio of the resin and the silicon compound in the coating agent is in a range of the mass of resin/silicon alkoxide in terms of $SiO_2$ of preferably 15/85 to 85/15, more preferably 20/80 to 65/35, still more preferably 20/80 to 40/60, and particularly preferably 20/80 to 50/50 in terms of the ratio of the mass of the silicon alkoxide (mass in terms of $SiO_2$) when the center atom Si is completely oxidized and the mass of the resin.

In the method for producing a laminated body, a ratio m/s of a peak intensity m of fragment ions derived from a metal element M and a peak intensity s of fragment ions derived from a segment having a Si-O bond is preferably 0.05 or more and 10.00 or less, the peak intensities being measured for a film obtained through the step of applying a coating agent and the step of drying the coating agent by a time-of-flight secondary ion mass spectrometer (TOF-SIMS). When m/s is 0.05 or more, the reaction promoting effect can be obtained even under low-temperature processing conditions, a layer excellent in barrier properties and wet heat resistance can be obtained while reducing the environmental load. By setting m/s to 10.00 or less, the stability of the coating liquid can be maintained, so that productivity is good and the environmental load can be reduced.

In the method for producing a laminated body, the value of $T_0/T_{130}$ described above with respect to the obtained laminated body is preferably 1.20 or less. Since the present aspect substantially corresponds to curing at a low temperature for a short time, the coating layer can be densely cured while reducing the environmental load due to heating and suppressing the coating layer from being damaged by shrinkage of the polyolefin-based resin film. Since the present aspect substantially corresponds to curing at a low temperature for a short time, the winding tightness of the polyolefin-based resin film can be suppressed and the barrier properties can be maintained.

As the coating method, known methods such as a direct gravure method, a reverse gravure method, a micro gravure method, a rod coating method, a bar coating method, a die coating method, and a spray coating method can be used without particular limitation. The drying temperature after application is preferably 70°C or higher and 150°C or lower, and more preferably 100°C or higher and 130°C or lower. The drying temperature after application is still more preferably 120°C or lower, and particularly preferably 110°C or lower. Note that, the drying temperature refers to the maximum attainment temperature of the film surface. When the drying temperature is 70°C or higher, the solvent can be removed to form a layer, and when the drying temperature is 150°C or lower, thermal shrinkage or deformation of the polyolefin-based resin film can be suppressed. After the application and drying, the laminated body of the present invention may be further heat-treated in order to advance the polycondensation reaction of the silicon alkoxide to improve barrier properties. The heat treatment temperature is preferably 30°C or higher and 100°C or lower, and more preferably 40°C or higher and 80°C or lower. The heat treatment time is preferably 1 day or more and 14 days or less, and more preferably 3 days or more and 7 days or less. When the heat treatment temperature is 30°C or higher, crosslinking of the coating layer can proceed to improve the barrier properties, and when the heat treatment temperature is 100°C or lower, curling or shrinkage of the film due to the heat treatment can be suppressed. Note that, the heat treatment temperature refers to an ambient temperature.

A packaging body of the present invention includes the laminated body. The packaging body may be laminated with a heat seal layer for printing or the like and package forming, or another resin film for improving rigidity. The heat seal layer or the resin film for improving rigidity is preferably a polyolefin-based resin in order to improve recyclability. When the laminated body is included in the packaging body, good and stable water vapor barrier properties and oxygen barrier properties are obtained, and deterioration of contents can be suppressed, which is preferable.

EXAMPLES

In the following, the present invention will be described based on Examples. Note that the present invention is not limited to these Examples, these Examples can be modified and changed based on the gist of the present invention, and these modifications and changes are not excluded from the scope of the invention.

[Evaluation method]

(1) Thickness of substrate film

The thickness was measured at any 10 points under an atmosphere at 23°C and 65% RH with the use of an electronic micrometer (K-312A type) manufactured by ANRITSU CORPORATION. The arithmetic average value of the thicknesses at the 10 points thus obtained was taken as the thickness (unit: $\mu$m) of the substrate film.

(2) Arithmetic mean height Sa of substrate film surface

The arithmetic mean height Sa was measured with the use of a scanning white-light interference microscope Vertscan VS1540 from Hitachi High-Tech Science Corporation, which is a three-dimensional non-contact surface profile measuring instrument. In analysis, with the use of attached analysis software, the undulation component was removed from a shot image by polynomial quartic approximation surface correction, then, the image was processed with a median ($3 \times 3$) filter, and then subjected to interpolation processing (processing of compensating for pixels from which height data failed to be acquired, with height data calculated from surrounding pixels). The measurement conditions were as follows.

· Measurement conditions: Objective lens 10×

Lens barrel 1×
Zoom lens 1×
Wavelength filter 530 nm white

· Measurement mode: Wave
· Measurement software: VS-Measure Version10.0.4.0
· Analysis software: VS-Viewer Version10.0.3.0
· Measurement area: $0.561 \times 0.561$ mm$^2$.

(3) Thickness of metal layer and/or inorganic compound layer

The thickness was measured by cross-section observation using a transmission electron microscope (TEM). A sample for observation was prepared by an FIB method with the use of Microsampling System FB-2000A manufactured by Hitachi, Ltd. (specifically, according to the method described in "Kobunshi Hyomen Kakogaku (Polymer Surface Processing)", (Satoru Iwamori), pp. 118 - 119). Subsequently, a cross section of the sample for observation was observed with a transmission electron microscope H-9000UHRII manufactured by Hitachi, Ltd. at an acceleration voltage of 300 kV, and the thickness of the metal layer and/or the inorganic compound layer was checked at arbitrary 10 sites. The arithmetic average value thereof was taken as the thickness (unit: nm) of the metal layer and/or the inorganic compound layer.

(4) Analysis by FT-IR-ATR method: P1/P2

Using the laminated body sampled to 30 mm × 30 mm, the spectrum was measured with the use of a Fourier transform infrared spectrophotometer FT/IR-6100 manufactured by JASCO Corporation, and predetermined peaks P1 and P2 were detected in the peak detection mode of the analysis software. P1/P2 was calculated from the obtained values of P1 and P2.

P1/P2 was calculated at three different positions, and the values at the three points were averaged to obtain P1/P2 of the sample.

· Light source: High luminance ceramic light source
· Detector: TGS
· Beam splitter: Ge/KBr
· Measurement mode: ATR method (Ge prism, incident angle 45°)
· Measurement wave number range: 4,000 $cm^{-1}$ to 600 $cm^{-1}$
· Resolution: 4 $cm^{-1}$
· Number of integrations: 32 times
· Analysis: Peaks were detected with Spectra Manager Version 2 spectrum analysis program

(5) Change rate of P1/P2 (Δ(P1/P2))

The laminated body was sampled into a size of 30 mm × 30 mm, and P1/P2 before the heat treatment was calculated by the method of (4). Thereafter, four corners of the measured sample were attached to a soda lime glass of 50mm × 50mm and a thickness of 1.1 mm with an adhesive tape (No. 31B manufactured by Nitto Denko Corporation) so as not to generate wrinkles, and the attached sample was placed in the upper stage of an oven (a thermostat safety oven SPHH-201 with a safety door manufactured by ESPEC CORP.) set at 120°C with the attached sample facing upward and heat-treated for 1 minute. The heat-treated sample was taken out, the fixed tape was peeled off, and P1/P2 after the heat treatment was calculated by the method of (4). A value obtained by subtracting P1/P2 before the heat treatment from P1/P2 after the heat treatment was denoted as the change amount Δ(P1/P2).

(6) Ratio m/s of peak intensity m of fragment ions derived from metal element M and peak intensity s of fragment ions derived from segment having a Si-O bond and ratio c/s of peak intensity c of fragment ions derived from carbon and peak intensity s of fragment ions derived from segment having Si-O bond

The peak intensity m of fragment ions derived from the metal element M and the peak intensity s of fragment ions derived from the segment having a Si-O bond were measured by secondary ion mass spectrometry at the center part of the coating layer using a time-of-flight secondary ion mass spectrometer TOF-SIMS5 manufactured by IONTOF GmbH and measurement software SURFACE LAB 7.1 manufactured by IONTOF GmbH, and the peak intensity ratio m/s was determined. Similarly, the ratio c/s of the peak intensity c of fragment ions derived from carbon and the peak intensity s of fragment ions derived from the segment having a Si-O bond was determined. The measurement conditions are as follows.

· Primary ion species: $Bi^+$ (2 pA, 50 μs)
· Acceleration voltage: 25 kV
· Detected ion polarity: positive
· Measurement range: 100 μm × 100 μm
· Resolution: 128 × 128
· Etching ion species: $O^{2+}$ (2 keV, 170 nA)
· Etching area: 300 μm × 300 μm
· Etching rate: 1sec/cycle.

(7) Calculation of free volume radius by positron annihilation method

The laminated body was attached to a silicon wafer of 15 mm × 15 mm, and the positron annihilation lifetime was measured under the following conditions using a sample vacuum degassed at 25°C.

Measuring apparatus: Small positron annihilation generator PALS-200A manufactured by Fuji Imvac Inc.

Positron source: $^{22}Na$-based positron annihilation
γ-ray detector: Scintillator made of $BaF_2$ and photomultiplier tube
Beam intensity: 3keV
Measurement temperature: 25°C

Measurement atmosphere: Vacuum
Total number of counts: About 5,000,000 counts

The obtained positron annihilation lifetime curve was subjected to a three-component analysis by nonlinear least squares program POSITRONFIT to determine $\tau 1$, $\tau 2$, and $\tau 3$ from those having a small annihilation lifetime. From the longest average annihilation lifetime $\tau 3$, the free volume radius R3 (nm) of pores was calculated using the following formula:

$$\tau 3 = (1/2)[1 - \{R3/(R3 + 0.166)\} + (1/2\pi)\sin$$

$$\{2\pi R3/(R3 + 0.166)\}]^{-1}$$

(8) Thickness of coating layer

The laminated body was cut with a microtome in a direction perpendicular to the film surface, and the cross section of the laminated body was observed with a scanning electron microscope and measured. For the observation, STEM (scanning transmission electron microscope/H-9000UHRII) manufactured by Hitachi, Ltd. was used, and three points were imaged at a magnification of 100,000 times. The thickness of the coating layer was measured in the obtained three images, and the average value thereof was taken as the thickness of the coating layer.

(9) Water vapor transmission rate

The water vapor transmission rate was measured under the conditions of a temperature of 40°C and a humidity of 90% RH with the use of a water vapor transmission rate measuring apparatus ("PERMATRAN" (registered trademark) W3/31) manufactured by MOCON/Modern Controls, Inc. according to the Method B of JIS K 7129 (2008). The measurement was performed twice for two test pieces, and the average value of the four measurement values in total was calculated and regarded as the water vapor transmission rate.

(10) Oxygen transmission rate

The oxygen transmission rate was measured under the conditions of a temperature of 23°C and a humidity of 90% RH using an oxygen transmission rate measuring apparatus ("OX-TRAN" (registered trademark) 2/20) manufactured by MOCON/Modern Controls, Inc. according to the equal-pressure method of JIS K 7126-2 (2006). The measurement was performed twice for two test pieces, and the average value of the four measurement values obtained was calculated and regarded as the oxygen transmission rate.

(11) Barrier stability (evaluation of barrier deterioration due to winding tightness or the like)

The laminated body was sampled into a size of 100 mm $\times$ 100 mm, a polypropylene film "TORAYFAN" manufactured by Toray Industries, Inc. was superimposed on the laminated body, and the laminated body was passed through a laminator under conditions of 23°C, and air pressure of 0.4 MPa, and a conveyance speed of 0.5 m/min using VA-420H type laminator manufactured by TAISEI LAMINATOR Co., LTD. Therefore, the laminated body was taken out, and the barrier properties were measured by the methods of (10) and (11) described above to examine barrier stability as post-processing resistance and resistance to pressure due to winding tightness.

(12) $SF_{145°C}$ - $SF_{121°C}$

<Identification of main orientation axis of laminated body>

The laminated body was cut into a rectangle of 50 mm in length and 10 mm in width with an arbitrary direction as a long side to obtain a sample <1>. In this case, the direction in which the long side of the rectangular sample <1> was directed was defined as 0°. Next, a sample <2> in the same size was collected such that the long side direction was directed in a direction rotated rightward by 15° from the 0° direction. Subsequently, samples <3> to <12> were collected in the same manner by similarly rotating the long side direction of the rectangular sample by 15° each. Next, each of the rectangular samples was set in a tensile tester ("Tensilon" (registered trademark) UCT-100 manufactured by ORIENTEC CORPORATION) at an initial chuck-to-chuck distance of 20 mm such that the long side direction is a tensile direction, and a tensile test was performed at a tensile speed of 300 mm/min under an atmosphere at room temperature. In this case, the maximum load until a sample breakage was read, and the value obtained by dividing the maximum load by the cross-sectional area (film thickness × width) of the sample before the test was calculated as the stress of the maximum point strength. The same measurement was performed five times for each of the samples to obtain the average value for the stress of the maximum point strength, and the long side direction of the sample with the largest average value was defined as the main orientation axis of the laminated body.

<Measurement of thermal shrinkage stress by thermomechanical analysis (TMA)>

The laminated body was cut into a rectangular sample of 4 mm in width and 50 mm in length with the "main orientation axis direction" defined as described above as a long side, and the sample was pinched by a metal chuck so as to have a test length of 20 mm. Thereafter, the sample was set in the following thermomechanical analyzer, and a thermal shrinkage stress curve in the main orientation axis direction in the laminated body with the test length kept constant was obtained under the following temperature conditions and load conditions.

(Apparatus)

· Apparatus: TMA/SS 6000 (manufactured by Seiko Instruments Inc.)
(Temperature conditions)
· Temperature range: 23 to 200°C
· Heating rate: 10°C/min
· Retention: 10 minutes
· Sampling time: 10 sec/procedure
· Nitrogen cooling: No
(Load conditions)
· Control mode: L
· Upper limit displacement during standby: 0 $\mu$m
· Initial displacement: 0 $\mu$m
· Load rate: 0.1 $\mu$m/min
· Retention: 600 minutes
· Measurement atmosphere: In nitrogen
· Measurement thickness: Sum of the thickness of the substrate film, the thickness of the metal layer and/or the inorganic compound layer, and the thickness of the coating layer

<Calculation of $SF_{145°C}$ - $SF_{121°C}$>

From the thermal shrinkage stress curve obtained by the measurement method described above, each of the following numerical values was read while the shrinkage stress value at the temperature closest to 25°C was corrected as a zero point, and $SF_{145°C}$ - $SF_{121°C}$ was calculated.

$SF_{145°C}$: Thermal shrinkage stress (MPa) at 145°C in the main orientation axis direction of the laminated body
$SF_{121°C}$: Thermal shrinkage stress (MPa) at 121°C in the main orientation axis direction of the laminated body

(13) tan$\delta$ of main orientation axis direction at 145°C

A test piece (5 mm in width × 20 mm in length) cut out with the main orientation axis direction of the laminated body, determined in (12), as a measurement direction and the measurement direction as a long side was attached to an apparatus chuck part under an atmosphere at 23°C, cooled down to a low temperature of -100°C, and tan$\delta$ was measured until the temperature reached 180°C from - 100°C after the start of temperature rise. A viscoelasticity-temperature curve was drawn by a dynamic viscoelasticity method, and the tan$\delta$ at each temperature was calculated. The test was performed with n = 3, and the average value of the values obtained was regarded as tan$\delta$ in the measurement direction. Further, the measuring apparatus and conditions are as follows.

· Apparatus: Rheogel-E4000 (manufactured by UBM)
· Geometry: Tensile
· Distance between chucks: 10 mm

· Frequency: 10 Hz
· Strain: 0.1 to 0.2%
· Temperature range: -100 to 180°C
· Heating rate: 5°C/min
· Measurement atmosphere: Nitrogen

(14) Package forming processability

A heat seal film was bonded to the laminated body using an adhesive to evaluate package forming processability. First, 5 g of an adhesive "DICDRY" (registered trademark) LX-500 manufactured by DIC Corporation and 0.5 g of a curing agent KO-55 were weighed, and diluted with ethyl acetate to a solid content concentration of 16%. The adhesive was applied so as to have a thickness of 3 $\mu$m on a surface having a coating layer of the laminated body and dried at 80°C, unstretched polypropylene films ZK207 (thickness: 70 $\mu$m) manufactured by TORAY ADVANCED FILM Co., Ltd. were then bonded to each other, and the resulting laminated product was aged at 40°C for 3 days. The unstretched polypropylene films bonded to each other were opposed to each other, and were bonded to each other by pressing at 0.1MPa for 1 second at 180°C in the upper part of the nip and 80°C in the lower part using a heat sealing tester TP-701-B manufactured by TESTER SANGYO CO., LTD., and deformation of the heat-sealed portion was evaluated.

A: There is no shrinkage or wrinkles in the heat-sealed portion.
B: There is deformation of shrinkage or wrinkles in the heat-sealed portion.

(15) Ratio of elongation at break ($T_0/T_{130}$)

<Measurement of elongation at break>

The laminated body was sampled into a rectangle of 150 mm in length × 10 mm in width with the main orientation axis direction of the laminated body determined in (12) as a measurement direction and the main orientation axis direction of the laminated body as a long side. Using a "Tensilon" (registered trademark) universal testing machine RTG-1210 manufactured by Orientec Co., Ltd., to, in which the sample was set at an initial chuck-to-chuck distance of 120 mm such that the long side direction was tensile direction, and the elongation at break was determined from the length at break when the sample was pulled in the measurement direction at a tensile speed of 300 mm/min at room temperature. The elongation at break is $(l-l_0)/l_0 \times 100$, where the sample length before the test is denoted as $l_0$ and the length at break is denoted as l. The elongation at break $T_0$ was measured without prior heat treatment. The elongation at break $T_{130}$ was measured by placing the sample in an oven (a thermostat safety oven SPHH-201 with a safety door manufactured by ESPEC CORP.) in a stable state at a set temperature of 130°C for 10 minutes or more, taking the sample out after 10 minutes under a laboratory environment of 23°C and 50% RH, and returning the sample to room temperature.

[Example 1]

(Formation of metal layer or inorganic compound layer)

An aluminum oxide layer having a thickness of 7 nm was formed as an inorganic compound layer on one surface of a biaxially stretched polypropylene film (polypropylene film manufactured by Toray Industries, Inc., melting point 170°C, Sa 21 nm) having a thickness of 12um. The aluminum oxide layer was deposited by a reactive vapor deposition method in which aluminum was evaporated, and oxygen was introduced into the deposited portion to oxidize the aluminum oxide layer.

(Formation of coating layer)

A polyvinyl alcohol (hereinafter, which may be abbreviated as PVA, Poval 28-98 manufactured by Kuraray Co., Ltd.) as a water-soluble polymer was put into a solvent with a ratio by mass of water/isopropyl alcohol = 97/3, and heated and stirred at 90°C to obtain a water-soluble polymer liquid with a solid content of 10% by mass. Next, 10.6 g of 0.02 N aqueous hydrochloric acid solution was added dropwise to a solution obtained by mixing 6.7 g of tetraethoxysilane (hereinafter, which may be abbreviated as TEOS) and 2.7 g of methanol while stirring to obtain a TEOS hydrolysis liquid. The water-soluble polymer liquid and the TEOS hydrolysis liquid were mixed so that the ratio of the PVA solid content of the water-soluble polymer liquid and the mass in terms of $SiO_2$ of TEOS was PVA solid content/mass in terms of $SiO_2$ = 35/65. Aluminum chelate (Aluminum Chelate D manufactured by Kawaken Fine Chemicals Co., Ltd.: aluminum monoacetylacetonate bis(ethyl acetoacetate)) was added to the obtained mixed liquid at a ratio by mass of TEOS of 3.0%, and the mixture was diluted with water so that the total solid content was 13% by mass, thereby obtaining a coating liquid. The coating liquid was applied onto the above-described aluminum oxide layer and dried at 120°C for 1 minute to obtain a laminated body. After the coating liquid was left to stand still in an environment of 23°C and 50% RH for 24 hours, since it was confirmed that no precipitate or gelation occurred, and the stability of the coating liquid was confirmed, there was no problem in practical use, but a trace amount of precipitate occurred after the coating liquid was left to stand still for 72 hours.

[Example 2]

A laminated body was obtained in the same manner as in Example 1, except that zirconium chelate (ORGATIX ZC-300 manufactured by Matsumoto Fine Chemical Co., Ltd.: zirconium lactate ammonium salt) was added instead of aluminum chelate at a ratio by mass of TEOS of 3.0%. After the coating liquid was left to stand still in an environment of 23°C and 50% RH for 24 hours, it was confirmed that no precipitate or gelation occurred, and it was confirmed that the stability of the coating liquid was sufficient.

[Example 3]

A laminated body was obtained in the same manner as in Example 2, except that the water-soluble polymer of the coating layer was changed to modified polyvinyl alcohol ("EXCEVAL" (registered trademark) RS-1717 manufactured by Kuraray Co., Ltd.), zirconium chelate (ORGATIX ZC-300 manufactured by Matsumoto Fine Chemical Co., Ltd.: zirconium lactate ammonium salt) was added at a ratio by mass of TEOS of 1.5%, and the coating liquid was applied onto the aluminum oxide layer, dried at 120°C, and further heat-treated at 80°C for 1 week. After the coating liquid was left to stand still in an environment of 23°C and 50% RH for 24 hours, it was confirmed that no precipitate or gelation occurred, and it was confirmed that the stability of the coating liquid was sufficient.

[Example 4]

A laminated body was obtained in the same manner as in Example 1, except that the coating layer was formed by the following procedure.

(Formation of coating layer)

A modified polyvinyl alcohol ("EXCEVAL" (registered trademark) RS-1717 manufactured by Kuraray Co., Ltd.) as a water-soluble polymer was put into a solvent with a ratio by mass of water/isopropyl alcohol = 97/3, and heated and stirred at 90°C to obtain a water-soluble polymer liquid with a solid content of 10% by mass. Next, 10.6 g of 0.02 N aqueous hydrochloric acid solution was added dropwise to a solution obtained by mixing 6.7 g of TEOS and 2.7 g of methanol while stirring to obtain a TEOS hydrolysis liquid. Titanium chelate (TC-310 manufactured by Matsumoto Fine Chemical Co. Ltd.: titanium lactate) was added at a ratio by mass of TEOS of 1.5% to a liquid obtained by mixing the water-soluble polymer liquid and the TEOS hydrolysis liquid so that the ratio of the PVA solid content of the water-soluble polymer liquid and the mass in terms of $SiO_2$ of TEOS was PVA solid content/mass in terms of $SiO_2$ = 20/80, and the mixture was diluted with water so that the total solid content was 13% by mass, thereby obtaining a coating liquid. The coating liquid was applied onto the above-described aluminum oxide layer, dried at 120°C for 1 minute, and heat-treated at 80°C for 1 week to obtain a laminated body. After the coating liquid was left to stand still in an environment of 23°C and 50% RH for 24 hours, it was confirmed that no precipitate or gelation occurred, and it was confirmed that the stability of the coating liquid was sufficient.

[Example 5]

A laminated body was obtained in the same manner as in Example 3, except that in the coating liquid preparation of the coating layer, the ratio of the PVA solid content of the water-soluble polymer liquid and the mass in terms of $SiO_2$ of the TEOS hydrolysis liquid was changed to PVA solid content/mass in terms of $SiO_2$ = 80/20, and zirconium chelate (ORGATIX ZC-300 manufactured by Matsumoto Fine Chemical Co. Ltd.: zirconium lactate ammonium salt) was added at a ratio by mass of TEOS of 3.0%. After the coating liquid was left to stand still in an environment of 23°C and 50% RH for 24 hours, it was confirmed that no precipitate or gelation occurred, and it was confirmed that the stability of the coating liquid was sufficient.

[Example 6]

A laminated body was obtained in the same manner as in Example 5, except that in the coating liquid preparation of the coating layer, the ratio of the PVA solid content of the water-soluble polymer liquid and the mass in terms of $SiO_2$ of

the TEOS hydrolysis liquid was changed to PVA solid content/mass in terms of $SiO_2$ = 55/45. After the coating liquid was left to stand still in an environment of 23°C and 50% RH for 24 hours, it was confirmed that no precipitate or gelation occurred, and it was confirmed that the stability of the coating liquid was sufficient.

[Example 7]

A laminated body was obtained in the same manner as in Example 5, except that in the coating liquid preparation of the coating layer, the ratio of the PVA solid content of the water-soluble polymer liquid and the mass in terms of $SiO_2$ of the TEOS hydrolysis liquid was changed to PVA solid content/mass in terms of $SiO_2$ = 5/95. After the coating liquid was left to stand still in an environment of 23°C and 50% RH for 24 hours, it was confirmed that no precipitate or gelation occurred, and it was confirmed that the stability of the coating liquid was sufficient.

[Examples 8 to 11]

Laminated bodies were obtained in the same manner as in Example 3, titanium chelate (TC-400 manufactured by Matsumoto Fine Chemical Co., Ltd.: titanium triethanolaminate) was added instead of zirconium chelate at a ratio by mass of TEOS of 4.0%, and the coating thickness was changed. After the coating liquid was left to stand still in an environment of 23°C and 50% RH for 24 hours, it was confirmed that no precipitate or gelation occurred, and it was confirmed that the stability of the coating liquid was sufficient.

[Example 12]

A laminated body was obtained in the same manner as in Example 3, except that an aluminum layer having a thickness of 50 nm was formed as a metal layer on one surface of a biaxially stretched polypropylene film by a vacuum vapor deposition method.

[Example 13]

A laminated body was obtained in the same manner as in Example 3, except that an undercoat layer was formed on one surface of a biaxially stretched polypropylene film and then an inorganic compound layer was formed. After the coating liquid was left to stand still in an environment of 23°C and 50% RH for 24 hours, it was confirmed that no precipitate or gelation occurred, and it was confirmed that the stability of the coating liquid was sufficient.
The undercoat layer was formed by the following procedure. To 100 parts by mass of "HYDRAN" (registered trademark) AP-201 (manufactured by DIC Corporation, solid content concentration: 23% by mass) as a polyester urethane-based water-dispersible resin, 6 parts by mass of a melamine compound "AMIDIR" (registered trademark) APM (manufactured by DIC Corporation) as a crosslinking agent was added, and 1 part by mass of "CATALYST" PTS (manufactured by DIC Corporation) as a water-soluble acidic compound as a crosslinking catalyst was further added. Subsequently, pure water was added to adjust such that the total solid content concentration was 10% by mass, thereby providing a mixed coating agent. This mixed coating liquid was applied to one surface of the biaxially stretched polypropylene film and dried at 110°C for 30 seconds to form an undercoat layer having a thickness of 700 nm.

[Example 14]

A laminated body was obtained in the same manner as in Example 3, except that zirconium chelate (ORGATIX ZC-300 manufactured by Matsumoto Fine Chemical Co., Ltd.: zirconium lactate ammonium salt) was added at a ratio by mass of TEOS of 3.0%, and the drying temperature was set to 100°C.

[Examples 15 to 17]

Laminated bodies were obtained in the same manner as in Example 3, except that the addition amount of zirconium chelate was set to a ratio by mass of TEOS of 3.0%, 10.5%, and 12%. After the coating liquid of Example 15 was left to stand still in an environment of 23°C and 50% RH for 24 hours, it was confirmed that no precipitate or gelation occurred, and it was confirmed that the stability of the coating liquid was sufficient. After the coating liquid of each of Examples 16 and 17 was left to stand still in an environment of 23°C and 50% RH for 24 hours, since it was confirmed that no precipitate or gelation occurred, there was no problem in practical use, but the viscosity of the coating liquid increased after the coating liquid was left to stand still for 72 hours.

[Examples 18 to 20]

Laminated bodies were obtained in the same manner as in Example 3, except that titanium chelate (TC-310 manufactured by Matsumoto Fine Chemical Co., Ltd.: titanium lactate) was added instead of zirconium chelate at a ratio by mass of TEOS of 0.5%, 1.5%, and 3.0%. After the coating liquid was left to stand still in an environment of 23°C and 50% RH for 24 hours, it was confirmed that no precipitate or gelation occurred, and it was confirmed that the stability of the coating liquid was sufficient.

[Example 21]

A laminated body was obtained in the same manner as in Example 3, except that aluminum chelate (Aluminum Chelate D manufactured by Kawaken Fine Chemicals Co., Ltd.: aluminum monoacetylacetonate bis(ethyl acetoacetate)) was added instead of zirconium chelate at a ratio by mass of TEOS of 1.5%. After the coating liquid was left to stand still in an environment of 23°C and 50% RH for 24 hours, since it was confirmed that no precipitate or gelation occurred, and the stability of the coating liquid was confirmed, there was no problem in practical use, but a trace amount of precipitate occurred after the coating liquid was left to stand still for 72 hours.

[Example 22]

A laminated body was obtained in the same manner as in Example 3, except that in the coating liquid preparation of the coating layer, the ratio of the PVA solid content of the water-soluble polymer liquid and the mass in terms of $SiO_2$ of the TEOS hydrolysis liquid was changed to PVA solid content/mass in terms of $SiO_2$ = 88/12, and aluminum chelate (Aluminum Chelate D manufactured by Kawaken Fine Chemicals Co., Ltd.: aluminum monoacetylacetonate bis(ethyl acetoacetate)) was added instead of zirconium chelate at a ratio by mass of TEOS of 3.0%. After the coating liquid was left to stand still in an environment of 23°C and 50% RH for 24 hours, since it was confirmed that no precipitate or gelation occurred, and the stability of the coating liquid was confirmed, there was no problem in practical use, but a trace amount of precipitate occurred after the coating liquid was left to stand still for 72 hours.

[Example 23]

A laminated body was obtained in the same manner as in Example 3, except that the biaxially stretched polypropylene film used was changed to a polypropylene film manufactured by Toray Industries, Inc. having a melting point of 170°C and Sa of 41 nm.

[Comparative Example 1]

A laminated body was obtained in the same manner as in Example 1, except that the coating layer was not formed.

[Comparative Example 2]

A laminated body was obtained in the same manner as in Example 1, except that aluminum chelate was not added, and the coating liquid was applied, then dried at 120°C for 1 minute, and further heat-treated at 80°C for 1 week. The surface of the laminated body was rubbed with a finger, and it was confirmed that the laminated body was in a cured state (no tackiness).

[Comparative Example 3]

A laminated body was obtained in the same manner as in Example 3, except that zirconium chelate was not added, and the coating liquid was applied, then dried at 120°C for 1 minute, and further heat-treated at 80°C for 1 month. The surface of the laminated body was rubbed with a finger, and it was confirmed that the laminated body was in a cured state (no tackiness).

[Comparative Example 4]

A laminated body was obtained in the same manner as in Example 3, except that zirconium chelate was not added, and the coating liquid was applied, then dried at 120°C for 1 minute, and further heat-treated at 40°C for 1 month. The surface of the laminated body was rubbed with a finger, and it was confirmed that the laminated body was in a cured state (no tackiness).

[Comparative Example 5]

A laminated body was obtained in the same manner as in Example 3, except that zirconium chelate was not added, and the coating liquid was applied and then dried at 160°C for 1 minute.

[Comparative Example 6]

A laminated body was obtained in the same manner as in Example 3, except that the addition amount of zirconium chelate was set to a ratio by mass of TEOS of 15%. After the coating liquid of Comparative Example 6 was left to stand still in an environment of 23°C and 50% RH for 24 hours, since no precipitate or gelation occurred, a sample could be prepared, but the viscosity of the coating liquid increased, and the stability of the coating liquid was insufficient.

[Comparative Example 7]

A laminated body was obtained in the same manner as in Example 3, except that the addition amount of zirconium chelate was set to a ratio by mass of TEOS of 0.05%.

[Table 1-1]

| | Resin film | Thickness [μm] | Arithmetic mean height Sa [nm] | Metal layer and/or inorganic oxide layer | Thickness [nm] |
|---|---|---|---|---|---|
| Example 1 | Biaxially stretched polypropylene film | 12 | 21 | Aluminum oxide | 7 |
| Example 2 | Biaxially stretched polypropylene film | 12 | 21 | Aluminum oxide | 7 |
| Example 3 | Biaxially stretched polypropylene film | 12 | 21 | Aluminum oxide | 7 |
| Example 4 | Biaxially stretched polypropylene film | 12 | 21 | Aluminum oxide | 7 |
| Example 5 | Biaxially stretched polypropylene film | 12 | 21 | Aluminum oxide | 7 |
| Example 6 | Biaxially stretched polypropylene film | 12 | 21 | Aluminum oxide | 7 |
| Example 7 | Biaxially stretched polypropylene film | 12 | 21 | Aluminum oxide | 7 |
| Example 8 | Biaxially stretched polypropylene film | 12 | 21 | Aluminum oxide | 7 |
| Example 9 | Biaxially stretched polypropylene film | 12 | 21 | Aluminum oxide | 7 |
| Example 10 | Biaxially stretched polypropylene film | 12 | 21 | Aluminum oxide | 7 |
| Example 11 | Biaxially stretched polypropylene film | 12 | 21 | Aluminum oxide | 7 |
| Example 12 | Biaxially stretched polypropylene film | 12 | 21 | Aluminum | 50 |
| Example 13 | Biaxially stretched polypropylene film | 12 | 21 | Aluminum oxide | 7 |
| Example 14 | Biaxially stretched polypropylene film | 12 | 21 | Aluminum oxide | 7 |
| Example 15 | Biaxially stretched polypropylene film | 12 | 21 | Aluminum oxide | 7 |
| Example 16 | Biaxially stretched polypropylene film | 12 | 21 | Aluminum oxide | 7 |
| Example 17 | Biaxially stretched polypropylene film | 12 | 21 | Aluminum oxide | 7 |
| Example 18 | Biaxially stretched polypropylene film | 12 | 21 | Aluminum oxide | 7 |
| Example 19 | Biaxially stretched polypropylene film | 12 | 21 | Aluminum oxide | 7 |
| Example 20 | Biaxially stretched polypropylene film | 12 | 21 | Aluminum oxide | 7 |
| Example 21 | Biaxially stretched polypropylene film | 12 | 21 | Aluminum oxide | 7 |
| Example 22 | Biaxially stretched polypropylene film | 12 | 21 | Aluminum oxide | 7 |
| Example 23 | Biaxially stretched polypropylene film | 12 | 41 | Aluminum oxide | 7 |

[Table 1-2]

|  | Resin | Silicon compound | Compound containing metal element M | Silicon ratio [%] |
|---|---|---|---|---|
| Example 1 | PVA | TEOS | Aluminum chelate | 65 |
| Example 2 | PVA | TEOS | Zirconium chelate | 65 |
| Example 3 | Modified PVA | TEOS | Zirconium chelate | 65 |
| Example 4 | Modified PVA | TEOS | Titanium chelate | 80 |
| Example 5 | Modified PVA | TEOS | Zirconium chelate | 20 |
| Example 6 | Modified PVA | TEOS | Zirconium chelate | 45 |
| Example 7 | Modified PVA | TEOS | Zirconium chelate | 95 |
| Example 8 | Modified PVA | TEOS | Titanium chelate | 65 |
| Example 9 | Modified PVA | TEOS | Titanium chelate | 65 |
| Example 10 | Modified PVA | TEOS | Titanium chelate | 65 |
| Example 11 | Modified PVA | TEOS | Titanium chelate | 65 |
| Example 12 | Modified PVA | TEOS | Zirconium chelate | 65 |
| Example 13 | Modified PVA | TEOS | Zirconium chelate | 65 |
| Example 14 | Modified PVA | TEOS | Zirconium chelate | 65 |
| Example 15 | Modified PVA | TEOS | Zirconium chelate | 65 |
| Example 16 | Modified PVA | TEOS | Zirconium chelate | 65 |
| Example 17 | Modified PVA | TEOS | Zirconium chelate | 65 |
| Example 18 | Modified PVA | TEOS | Titanium chelate | 65 |
| Example 19 | Modified PVA | TEOS | Titanium chelate | 65 |
| Example 20 | Modified PVA | TEOS | Titanium chelate | 65 |
| Example 21 | Modified PVA | TEOS | Aluminum chelate | 65 |
| Example 22 | Modified PVA | TEOS | Aluminum chelate | 12 |
| Example 23 | Modified PVA | TEOS | Zirconium chelate | 65 |

[Table 2]

|  | Coating layer thickness [nm] | P1/P2 | Δ (P1/P2) | m/s | c/s | $SF_{145°C} - SF_{120°C}$ | tanδ | $T_0/T_{130}$ | Free volume radius [nm] |
|---|---|---|---|---|---|---|---|---|---|
| Example 1 | 330 | 3.5 | 0.4 | 2.50 | 0.079 | 1.33 | 0.18 | 0.97 | 0.261 |
| Example 2 | 320 | 3.7 | 0.3 | 2.00 | 0.072 | 1.33 | 0.18 | 0.96 | 0.258 |
| Example 3 | 320 | 4.5 | 0.1 | 0.80 | 0.072 | 1.33 | 0.18 | 1.08 | 0.257 |
| Example 4 | 310 | 6.4 | 0.0 | 0.60 | 0.030 | 1.33 | 0.18 | 1.07 | 0.255 |
| Example 5 | 320 | 6.6 | 0.0 | 2.70 | 0.446 | 1.33 | 0.18 | 1.08 | 0.259 |
| Example 6 | 320 | 5.2 | 0.2 | 2.30 | 0.137 | 1.33 | 0.18 | 1.07 | 0.258 |
| Example 7 | 320 | 7.5 | 0.0 | 2.10 | 0.009 | 1.33 | 0.18 | 1.08 | 0.259 |
| Example 8 | 275 | 4.9 | 0.0 | 3.60 | 0.076 | 1.33 | 0.18 | 1.10 | 0.259 |
| Example 9 | 430 | 3.7 | 0.3 | 3.70 | 0.076 | 1.33 | 0.18 | 1.02 | 0.259 |
| Example 10 | 240 | 6.8 | 0.1 | 3.50 | 0.077 | 1.33 | 0.18 | 1.08 | 0.259 |
| Example 11 | 520 | 3.6 | 0.4 | 3.80 | 0.076 | 1.33 | 0.18 | 1.08 | 0.259 |

(continued)

| | Coating layer thickness [nm] | P1/P2 | Δ (P1/P2) | m/s | c/s | $SF_{145°C}$ - $SF_{120°C}$ | tanδ | $T_0/T_{130}$ | Free volume radius [nm] |
|---|---|---|---|---|---|---|---|---|---|
| Example 12 | 320 | 4.4 | 0.1 | 0.70 | 0.079 | 1.33 | 0.18 | 1.13 | 0.256 |
| Example 13 | 310 | 4.5 | 0.1 | 0.70 | 0.079 | 1.33 | 0.18 | 1.18 | 0.256 |
| Example 14 | 330 | 3.6 | 0.3 | 2.10 | 0.069 | 1.33 | 0.18 | 0.99 | 0.259 |
| Example 15 | 320 | 6.1 | 0.0 | 2.00 | 0.077 | 1.33 | 0.18 | 1.06 | 0.258 |
| Example 16 | 340 | 6.7 | 0.0 | 8.20 | 0.087 | 1.33 | 0.18 | 1.08 | 0.261 |
| Example 17 | 350 | 6.9 | 0.0 | 10.00 | 0.091 | 1.33 | 0.18 | 1.10 | 0.262 |
| Example 18 | 320 | 4.8 | 0.0 | 0.50 | 0.075 | 1.33 | 0.18 | 1.09 | 0.256 |
| Example 19 | 330 | 6.4 | 0.0 | 0.70 | 0.074 | 1.33 | 0.18 | 1.02 | 0.256 |
| Example 20 | 320 | 6.5 | 0.0 | 2.20 | 0.079 | 1.33 | 0.18 | 1.06 | 0.258 |
| Example 21 | 340 | 3.6 | 0.4 | 1.20 | 0.072 | 1.33 | 0.18 | 1.08 | 0.260 |
| Example 22 | 330 | 6.9 | 0.0 | 2.80 | 0.735 | 1.33 | 0.18 | 1.07 | 0.260 |
| Example 23 | 320 | 4.5 | 0.1 | 0.80 | 0.072 | 2.20 | 0.24 | 1.15 | 0.257 |

[Table 3]

| | Water vapor transmission rate [g/m²/24hr] | Oxygen transmission rate [cc/m²/24hr] | Pressure resistance test water vapor transmission rate [g/m²/24hr] | Pressure resistance test oxygen transmission rate [cc/m²/24hr] | Package forming processability |
|---|---|---|---|---|---|
| Example 1 | 1.1 | 1.0 | 1.3 | 1.2 | A |
| Example 2 | 0.7 | 0.5 | 0.9 | 0.6 | A |
| Example 3 | 0.3 | 0.3 | 0.3 | 0.3 | A |
| Example 4 | 0.2 | 0.2 | 0.2 | 0.3 | A |
| Example 5 | 0.8 | 0.4 | 0.9 | 0.8 | A |
| Example 6 | 0.5 | 0.2 | 0.6 | 0.2 | A |
| Example 7 | 1.0 | 0.6 | 1.6 | 1.0 | A |
| Example 8 | 0.7 | 0.4 | 0.8 | 0.6 | A |
| Example 9 | 0.8 | 0.4 | 1.0 | 0.6 | A |
| Example 10 | 0.9 | 0.4 | 1.0 | 0.5 | A |
| Example 11 | 1.1 | 0.4 | 1.4 | 0.6 | A |
| Example 12 | 0.1 | 0.2 | 0.1 | 0.2 | A |
| Example 13 | 0.2 | 0.2 | 0.2 | 0.2 | A |
| Example 14 | 1.0 | 0.8 | 1.3 | 1.0 | A |
| Example 15 | 0.5 | 0.4 | 0.6 | 0.5 | A |
| Example 16 | 0.9 | 0.7 | 1.0 | 0.7 | A |
| Example 17 | 1.1 | 0.7 | 1.2 | 0.7 | A |
| Example 18 | 0.6 | 0.3 | 0.3 | 0.3 | A |
| Example 19 | 0.3 | 0.2 | 0.3 | 0.2 | A |
| Example 20 | 0.4 | 0.4 | 0.5 | 0.5 | A |

(continued)

|  | Water vapor transmission rate [g/m²/24hr] | Oxygen transmission rate [cc/m²/24hr] | Pressure resistance test water vapor transmission rate [g/m²/24hr] | Pressure resistance test oxygen transmission rate [cc/m²/24hr] | Package forming processability |
|---|---|---|---|---|---|
| Example 21 | 1.0 | 0.9 | 1.2 | 1.1 | A |
| Example 22 | 1.0 | 0.6 | 1.6 | 0.9 | A |
| Example 23 | 0.3 | 0.3 | 0.3 | 0.3 | B |

[Table 4-1]

|  | Resin film | Thickness [μm] | Arithmetic mean height Sa [nm] | Metal layer and/or inorganic oxide layer | Thickness [nm] |
|---|---|---|---|---|---|
| Comparative Example 1 | Biaxially stretched polypropylene film | 12 | 21 | Aluminum oxide | 7 |
| Comparative Example 2 | Biaxially stretched polypropylene film | 12 | 21 | Aluminum oxide | 7 |
| Comparative Example 3 | Biaxially stretched polypropylene film | 12 | 21 | Aluminum oxide | 7 |
| Comparative Example 4 | Biaxially stretched polypropylene film | 12 | 21 | Aluminum oxide | 7 |
| Comparative Example 5 | Biaxially stretched polypropylene film | 12 | 21 | Aluminum oxide | 7 |
| Comparative Example 6 | Biaxially stretched polypropylene film | 12 | 21 | Aluminum oxide | 7 |
| Comparative Example 7 | Biaxially stretched polypropylene film | 12 | 21 | Aluminum oxide | 7 |

[Table 4-2]

|  | Resin | Silicon compound | Compound containing metal element M | Silicon ratio [%] |
|---|---|---|---|---|
| Comparative Example 1 | - | - | - | - |
| Comparative Example 2 | PVA | TEOS | - | 65 |
| Comparative Example 3 | Modified PVA | TEOS | - | 65 |
| Comparative Example 4 | Modified PVA | TEOS | - | 65 |
| Comparative Example 5 | Modified PVA | TEOS | - | 65 |
| Comparative Example 6 | Modified PVA | TEOS | Zirconium chelate | 65 |
| Comparative Example 7 | Modified PVA | TEOS | Zirconium chelate | 65 |

[Table 5]

|  | Coating layer thickness [nm] | P1/P2 | Δ (P1/P2) | m/s | c/s | $SF_{145°C}$ - $SF_{120°C}$ | tanδ | $T_0/T_{130}$ | Free volume radius [nm] |
|---|---|---|---|---|---|---|---|---|---|
| Comparative Example 1 | - | - | - | - | - | 1.33 | 0.18 | 0.95 |  |
| Comparative Example 2 | 330 | 2.8 | 0.6 | - | 0.070 | 1.33 | 0.18 | 1.04 | 0.264 |

(continued)

| | Coating layer thickness [nm] | P1/P2 | Δ (P1/P2) | m/s | c/s | $SF_{145°C}$ - $SF_{120°C}$ | tanδ | $T_0/T_{130}$ | Free volume radius [nm] |
|---|---|---|---|---|---|---|---|---|---|
| Comparative Example 3 | 320 | 8.1 | 0.0 | - | 0.072 | 1.33 | 0.18 | 1.35 | 0.277 |
| Comparative Example 4 | 300 | 2.9 | 0.2 | - | 0.067 | 1.33 | 0.18 | 1.00 | 0.270 |
| Comparative Example 5 | 320 | 8.1 | 0.0 | - | 0.070 | 1.33 | 0.18 | 1.31 | 0.269 |
| Comparative Example 6 | 340 | 8.1 | 0.0 | 12.00 | 0.092 | 1.33 | 0.18 | 1.09 | 0.266 |
| Comparative Example 7 | 330 | 3.3 | 0.6 | 0.03 | 0.080 | 1.33 | 0.18 | 1.05 | 0.262 |

[Table 6]

| | Water vapor transmission rate [g/m²/24hr] | Oxygen transmission rate [cc/m²/24hr] | Pressure resistance test water vapor transmission rate [g/m²/24hr] | Pressure resistance test oxygen transmission rate [cc/m²/24hr] | Package forming processability |
|---|---|---|---|---|---|
| Comparative Example 1 | 2.2 | > 50 | 6.2 | > 50 | A |
| Comparative Example 2 | 1.2 | 0.7 | 3.1 | 1.2 | A |
| Comparative Example 3 | 4.8 | 10.2 | 7.3 | 15. 4 | A |
| Comparative Example 4 | 2.9 | 1.6 | 5.8 | 2.2 | A |
| Comparative Example 5 | 7.6 | > 50 | 8.1 | > 50 | B |
| Comparative Example 6 | 1.4 | 1.2 | 2.0 | 1.8 | A |
| Comparative Example 7 | 1.2 | 0.7 | 2.8 | 1.1 | A |

In Comparative Example 2, it is considered that since there was no additive and the drying temperature of the coating layer was low, unreacted sites remained in the coating layer, and barrier stability could not be obtained.

In Comparative Example 3, it is considered that the heat treatment time after drying of the coating layer was long, and the coating layer was damaged by shrinkage of the film, so that the barrier properties were greatly deteriorated.

In Comparative Example 4, it is considered that since the heat treatment temperature after drying of the coating layer was low, damage due to shrinkage of the film was small even when the heat treatment time was long, but the coating layer was not sufficiently densified and the barrier properties were deteriorated.

In Comparative Example 5, it is considered that the drying temperature of the coating layer was high, the coating layer was damaged by shrinkage of the film, and minute cracks and the like were generated, so that the oxygen barrier properties were significantly deteriorated.

From the above results, the present invention can provide good barrier properties and further good barrier stability in a laminated body using a polyolefin-based resin substrate having low heat resistance.

DESCRIPTION OF REFERENCE SIGNS

1: Polyolefin-based resin film
2: Metal layer and/or inorganic oxide layer
3: Coating layer
4: Peak indicating P1
5: Peak indicating P2

**Claims**

1. A laminated body comprising an inorganic layer on at least one surface of a polyolefin-based resin film, wherein one or more of the inorganic layers each have a metal layer and/or an inorganic compound layer, and a value of a ratio P1/P2 of the following peak intensities P1 and P2 is 3.5 or more and 8.0 or less, the peak intensities being detected by measuring at least one outermost layer (hereinafter, referred to as a coating layer) of the laminated body by a FT-IR-ATR method (total reflection Fourier transform infrared spectroscopy):

    P1: an intensity of a maximum peak present at 1,050 to 1,080 $cm^{-1}$
    P2: an intensity of a maximum peak present at 920 to 970 $cm^{-1}$.

2. The laminated body according to claim 1, wherein the coating layer contains a water-soluble resin and a hydrolysate of a metal alkoxide and/or a polycondensate thereof.

3. The laminated body according to claim 1 or 2, wherein a change amount $\Delta$(P1/P2) of the value of the ratio P1/P2 of the following peak intensities P1 and P2 detected by analyzing the coating layer by a FT-IR-ATR method before and after a heat treatment at 120°C for 1 minute is -0.5 or more and 0.5 or less.

4. A laminated body comprising one or more inorganic layers on at least one surface of a polyolefin-based resin film,

    wherein the one or more inorganic layers each have a metal layer and/or an inorganic compound layer, at least one outermost layer (hereinafter, referred to as a coating layer) of the laminated body contains one or more segments selected from a segment derived from a vinyl alcohol-based resin, a segment derived from a polysaccharide, and a segment derived from an acrylic polyol resin, and a segment having a Si-O bond and a metal element M other than silicon Si, and a ratio m/s of a peak intensity m of fragment ions derived from the metal element M and a peak intensity s of fragment ions derived from the segment having a Si-O bond is 0.05 or more and 10.00 or less, the peak intensities being measured by a time-of-flight secondary ion mass spectrometer (TOF-SIMS) under the following measurement conditions at a center part of a thickness of the coating layer:
    <Measurement conditions>
    Primary ion species: $Bi^+$ (2 pA, 50 $\mu$s) Acceleration voltage: 25 kV
    Detected ion polarity: positive
    Measurement range: 100 $\mu$m $\times$ 100 $\mu$m
    Resolution: 128 $\times$ 128
    Etching ion species: $O^{2+}$ (2 keV, 170 nA)
    Etching area: 300 $\mu$m $\times$ 300 $\mu$m
    Etching rate: 1sec/cycle.

5. The laminated body according to claim 4, wherein the metal element M contained in the coating layer contains at least one metal element of aluminum, titanium, and zirconium.

6. The laminated body according to any one of claims 1 to 5, wherein a ratio c/s of a peak intensity c of fragment ions derived from carbon and a peak intensity s of fragment ions derived from the segment having a Si-O bond is 0.015 or more and 0.650 or less, the peak intensities being measured by a time-of-flight secondary ion mass spectrometer (TOF-SIMS) at a center part of a thickness of the coating layer.

7. The laminated body according to any one of claims 1 to 6, wherein the laminated body satisfies $SF_{145°C}$ - $SF_{121°C} \leq$ 2.50 MPa, where a stress at 121°C in a main orientation axis direction and a stress at 145°C in the main orientation axis direction, measured by thermomechanical analysis (TMA), are denoted respectively by $SF_{121°C}$ and $SF_{145°C}$.

8. The laminated body according to any one of claims 1 to 7, wherein tan$\delta$ of the main orientation axis direction at 145°C is 0.25 or less.

9. The laminated body according to any one of claims 1 to 8, wherein when an elongation at break of the main orientation axis direction is denoted as $T_0$ and an elongation at break of the main orientation axis direction as measured after the laminated body is heat-treated at 130°C for 10 minutes is denoted as $T_{130}$, a value of $T_0/T_{130}$ is 1.20 or less.

10. The laminated body according to any one of claims 1 to 9, wherein a free volume radius of pores in the coating layer is 0.260 nm or less, the free volume radius being determined by a positron annihilation method under the following measurement conditions:

    <Measurement conditions>

    Sample pretreatment: The laminated body is attached to a silicon wafer of 15 mm × 15 mm and vacuum degassed at 25°C
    Positron source: $^{22}$Na-based positron annihilation
    $\gamma$-ray detector: Scintillator made of $BaF_2$ and photomultiplier tube
    Beam intensity: 3keV
    Measurement temperature: 25°C
    Measurement atmosphere: Vacuum
    Total number of counts: About 5,000,000 counts
    The obtained positron annihilation lifetime curve is subjected to a three-component analysis by nonlinear least squares program POSITRONFIT to determine $\tau1$, $\tau2$, and $\tau3$ from those having a small annihilation lifetime; from the longest average annihilation lifetime $\tau3$, the free volume radius R3 (nm) of pores is calculated using the following formula:

$$\tau3 = (1/2)[1 - \{R3/(R3 + 0.166)\} + (1/2\pi)\sin \{2\pi R3/(R3 + 0.166)\}]^{-1}$$

11. The laminated body according to any one of claims 1 to 10, wherein the polyolefin-based resin film contains polypropylene.

12. The laminated body according to any one of claims 1 to 11, wherein a thickness of the coating layer is 200 nm or more and 600 nm or less.

13. The laminated body according to any one of claims 1 to 12, wherein the metal layer or the inorganic compound layer contains aluminum.

14. The laminated body according to any one of claims 1 to 13, wherein a water vapor transmission rate of the laminated body is 1.0 g/m$^2$/24 hr or less and an oxygen transmission rate of the laminated body is 1.0 cc/m$^2$/24 hr or less.

15. The laminated body according to any one of claims 1 to 14, wherein the metal layer or the inorganic compound layer has direct contact with the polyolefin-based resin film.

16. A packaging body comprising the laminated body according to any one of claims 1 to 15.

17. A method for producing a laminated body having an inorganic layer on at least one surface of a polyolefin-based resin film, the producing method of forming a coating layer on a surface of the laminated body having an inorganic layer, the producing method comprising:

    a step of applying a coating agent containing a water-soluble resin and a hydrolysate of a metal alkoxide and/or a polycondensate thereof; and
    a step of drying the coating agent,
    wherein a value of a ratio P1/P2 of the following peak intensities P1 and P2 is 3.5 or more and 8.0 or less, the peak intensities being detected by measuring the coating layer by a FT-IR-ATR method (total reflection Fourier transform infrared spectroscopy):

P1: an intensity of a maximum peak present at 1,050 to 1,080 cm$^{-1}$
P2: an intensity of a maximum peak present at 920 to 970 cm$^{-1}$.

18. A method for producing a laminated body, the producing method comprising:

a step of applying a coating agent containing one or more selected from silicon alkoxide, a hydrolysate of silicon alkoxide, and a polycondensate of a hydrolysate of silicon alkoxide, one or more resins selected from a vinyl alcohol-based resin, a polysaccharide, and an acrylic polyol resin, and a compound containing a metal element M other than silicon Si to at least one outermost layer on an inorganic layer side of a laminated body having a polyolefin-based resin film and one or more inorganic layers; and
a step of drying the coating agent,
wherein a ratio m/s of a peak intensity m of fragment ions derived from the metal element M and a peak intensity s of fragment ions derived from a segment having a Si-O bond is 0.05 or more and 10.00 or less, the peak intensities being measured for a film obtained by applying and drying the coating agent by a time-of-flight secondary ion mass spectrometer (TOF-SIMS).

19. The method for producing a laminated body according to claim 17 or 18, wherein the producing method comprises a step of applying a coating agent containing one or more selected from silicon alkoxide represented by Si(OR)$_4$, a hydrolysate of silicon alkoxide represented by Si(OR)$_4$, and a polycondensate of a hydrolysate of silicon alkoxide represented by Si(OR)$_4$, one or more resins selected from a vinyl alcohol-based resin, a polysaccharide, and an acrylic polyol resin, and a compound containing a metal element M other than silicon Si to at least one outermost layer on an inorganic layer side of a laminated body having a polyolefin-based resin film and one or more inorganic layers, and a step of drying the coating agent:
R: Alkyl group.

20. The method for producing a laminated body according to any one of claims 17 to 19, wherein a ratio c/s of a peak intensity c of fragment ions derived from carbon and a peak intensity s of fragment ions derived from a segment having a Si-O bond is 0.015 or more and 0.650, the peak intensities being measured for a film obtained through the step of applying a coating agent and the step of drying the coating agent by a time-of-flight secondary ion mass spectrometer (TOF-SIMS).

Figure 1

Figure 2

## INTERNATIONAL SEARCH REPORT

| International application No. |
|---|
| **PCT/JP2023/007750** |

### A. CLASSIFICATION OF SUBJECT MATTER

**B32B 27/32**(2006.01)i; **B32B 9/00**(2006.01)i; **B65D 65/40**(2006.01)i
FI: B32B27/32 Z; B32B9/00 A; B65D65/40 D

According to International Patent Classification (IPC) or to both national classification and IPC

### B. FIELDS SEARCHED

Minimum documentation searched (classification system followed by classification symbols)

B32B1/00-43/00; B65D65/00-65/46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2019/044525 A1 (TORAY ADVANCED FILM CO., LTD.) 07 March 2019 (2019-03-07) entire text | 1-20 |
| A | JP 2018-140552 A (TORAY INDUSTRIES) 13 September 2018 (2018-09-13) entire text | 1-20 |
| A | JP 2007-210262 A (DAINIPPON PRINTING CO LTD) 23 August 2007 (2007-08-23) entire text | 1-20 |
| A | JP 2002-362617 A (TOPPAN PRINTING CO LTD) 18 December 2002 (2002-12-18) entire text | 1-20 |
| A | JP 2020-119755 A (DAINIPPON PRINTING CO LTD) 06 August 2020 (2020-08-06) entire text | 1-20 |
| A | JP 2021-49779 A (DAINIPPON PRINTING CO LTD) 01 April 2021 (2021-04-01) entire text | 1-20 |
| A | JP 2000-185375 A (MITSUBISHI CHEMICALS CORP) 04 July 2000 (2000-07-04) entire text | 1-20 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 April 2023** | **09 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/007750**

| Patent document cited in search report | | | Publication date (day/month/year) | Patent family member(s) | | | Publication date (day/month/year) |
|---|---|---|---|---|---|---|---|
| WO | 2019/044525 | A1 | 07 March 2019 | US | 2020/0189252 | A1 | |
| | | | | EP | 3677424 | A1 | |
| | | | | CN | 111051054 | A | |
| | | | | KR | 10-2020-0044786 | A | |
| JP | 2018-140552 | A | 13 September 2018 | (Family: none) | | | |
| JP | 2007-210262 | A | 23 August 2007 | (Family: none) | | | |
| JP | 2002-362617 | A | 18 December 2002 | (Family: none) | | | |
| JP | 2020-119755 | A | 06 August 2020 | (Family: none) | | | |
| JP | 2021-49779 | A | 01 April 2021 | WO | 2021/045127 | A1 | |
| JP | 2000-185375 | A | 04 July 2000 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007216504 A

- JP 2004203022 A

**Non-patent literature cited in the description**

- **SATORU IWAMORI**. Kobunshi Hyomen Kakogaku. *Polymer Surface Processing*, 118-119